(19)

**Europäisches Patentamt**

**European Patent Office**

**Office européen des brevets**

(11) **EP 4 764 903 A1**

(12) **EUROPEAN PATENT APPLICATION**

(43) Date of publication:
24.06.2026 Bulletin 2026/26

(21) Application number: 25224907.3

(22) Date of filing: 18.12.2025

(51) International Patent Classification (IPC):
*G06F 17/16* (2006.01)    *G06F 8/00* (2018.01)

(52) Cooperative Patent Classification (CPC):
**G06F 17/16; G06F 8/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.12.2024 US 202418986199**

(71) Applicant: **Mellanox Technologies, Ltd.**
**2069200 Yokneam (IL)**

(72) Inventors:
• **BHATTACHARYA, Subhadeep**
**2069200 Yokneam (IL)**

• **POLYAKOV, Artem**
**2069200 Yokneam (IL)**
• **YEHEZKEL, Aviad Shaul**
**2069200 Yokneam (IL)**
• **SHALOM, Gal**
**2069200 Yokneam (IL)**
• **KAHALON, Omri**
**2069200 Yokneam (IL)**

(74) Representative: **Mathys & Squire**
**32 London Bridge Street**
**The Shard**
**London SE1 9SG (GB)**

(54) **ACCELERATING PROCESSING OF DISTRIBUTED MATRIX MULTIPLICATION OPERATIONS**

(57)    Approaches presented herein provide for the efficient performance of operations such as general matrix multiplication (GEMM) operations. Data for such operations can be prefetched as needed, such as directly before a specific computation is to be performed on a pair of blocks of data. Prefetching for a subsequent computation can be performed during a current computation. After a current computation, the results can be accumulated during a subsequent computation, such as by using a data processing unit to offload the accumulation operation and free up one or more processing cores for other computations. Such operations can be performed in parallel until completed for each block of a result matrix. Individual computations can also be split among multiple workers (e.g., processing units) in at least one embodiment.

FIG. 1

## Description

TECHNICAL FIELD

This disclosure relates to the distributed processing of data, and in at least one embodiment relates to the acceleration of general matrix multiplication (GEMM)-type operations using data prefetching and offloading to one or more acceleration and/or processing units, such as data processing units (DPUs).

BACKGROUND

In various computing operations - such as may relate to scientific simulation or machine learning - there is a need to perform mathematical operations including matrix multiplication or similar computations. Most of the available methodologies use computation cores on central processing units (CPUs) or graphics processing units (GPUs) to perform not only compute-heavy operations, such as sub-matrix multiplication, but also additional operations such as accumulation and reduction operations that are not as compute-heavy. Such an approach requires that a number of main processing cycles of these processing units be used for these additional operations, instead of being available for use to perform the compute-heavy operations, which can have a negative impact on the overall performance of the operations. In addition, attempting to perform both types of operations simultaneously in a time-efficient manner is very challenging, as it will often be the case that no progress can be made in network-bound accumulation and/or reduction operations while a given processing unit is performing compute-heavy sub-matrix multiplication.

SUMMARY

The invention is defined by the claims. In order to illustrate the invention, aspects and embodiments which may or may not fall within the scope of the claims are described herein.

Approaches presented herein provide for the efficient performance of operations such as general matrix multiplication (GEMM) operations. Data for such operations can be prefetched as needed, such as directly before a specific computation is to be performed on a pair of blocks of data. Prefetching for a subsequent computation can be performed during a current computation. After a current computation, the results can be accumulated during a subsequent computation, such as by using a data processing unit to offload the accumulation operation and free up one or more processing cores for other computations. Such operations can be performed in parallel until completed for each block of a result matrix. Individual computations can also be split among multiple workers (e.g., processing units) in at least one embodiment.

Any feature of one aspect or embodiment may be applied to other aspects or embodiments, in any appropriate combination. In particular, any feature of a method aspect or embodiment may be applied to an apparatus aspect or embodiment, and vice versa.

BRIEF DESCRIPTION OF THE DRAWINGS

Various embodiments in accordance with the present disclosure will be described with reference to the drawings, in which:

FIG. 1 illustrates an example network architecture that can be used to perform computing operations on behalf of a user, according to at least one embodiment.

FIG. 2 illustrates an approach to distributing matrix multiplication operations across a set of workers, according to at least one embodiment.

FIG. 3A illustrates a matrix multiplication pipeline including concurrent performance of operations, according to at least one embodiment.

FIG. 3B illustrates an example process flow for matrix multiplication operations with DPU offload, according to at least one embodiment.

FIG. 4 illustrates an example process that can be performed for a matrix multiplication operation, according to at least one embodiment.

FIG. 5 illustrates an example data center system, according to at least one embodiment;

FIG. 6 is a block diagram illustrating a computer system, according to at least one embodiment;

FIG. 7 is a block diagram illustrating a computer system, according to at least one embodiment;

FIG. 8 illustrates a computer system, according to at least one embodiment;

FIG. 9 illustrates a computer system, according to at least one embodiment;

FIG. 10 illustrates exemplary integrated circuits and associated graphics processors, according to at least one embodiment;

FIGS. 11A, 11B illustrate exemplary integrated circuits and associated graphics processors, according to at least one embodiment;

FIG. 12 illustrates a computer system, according to at least one embodiment;

FIG. 13A illustrates a parallel processor, according to at least one embodiment;

FIG. 13B illustrates a partition unit, according to at least one embodiment;

FIG. 14 illustrates at least portions of a graphics processor, according to one or more embodiments.

DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

The systems and methods described herein may be used by, without limitation, non-autonomous vehicles or machines, semi-autonomous or autonomous vehicles or machines (e.g., in one or more advanced driver assistance systems (ADAS), one or more in-vehicle infotainment systems, one or more emergency vehicle detection systems), piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, trains, underwater craft, remotely operated vehicles such as drones, and/or other vehicle types. Further, the systems and methods described herein may be used for a variety of purposes, by way of example and without limitation, for machine control, machine locomotion, machine driving, synthetic data generation, generative AI, model training or updating, perception, augmented reality, virtual reality, mixed reality, robotics, security and surveillance, simulation and digital twinning, autonomous or semi-autonomous machine applications, deep learning, environment simulation, data center processing, conversational AI, light transport simulation (e.g., ray-tracing, path tracing, etc.), collaborative content creation for 3D assets, generative AI, cloud computing, and/or any other suitable applications.

Disclosed embodiments may be comprised in a variety of different systems such as automotive systems (e.g., an in-vehicle infotainment system for an autonomous or semi-autonomous machine, a perception system for an autonomous or semi-autonomous machine), systems implemented using a robot, aerial systems, medical systems, boating systems, smart area monitoring systems, systems for performing deep learning operations, systems for performing simulation operations, systems for performing digital twin operations, systems implemented using an edge device, systems incorporating one or more virtual machines (VMs), systems for performing synthetic data generation operations, systems implemented at least partially in a data center, systems for performing conversational AI operations, systems implementing one or more language models -- such as large language models (LLMs), systems for performing generative AI operations (e.g., using one or more language models), systems for performing light transport simulation, systems for performing collaborative content creation for 3D assets, systems implemented at least partially using cloud computing resources, and/or other types of systems.

Approaches in accordance with various illustrative embodiments can provide for acceleration of general matrix multiplication (GEMM)-type operations using one or more data processing units (DPUs), or other such distributed processing units. Accelerated processing can be obtained in part by using a pipeline in which (pre-fetched) data transmission, computation, and accumulation steps can be performed concurrently and in parallel using different processing units. The accumulate operation of an update can be offloaded to a target DPU due in part to the asynchronous nature of the accumulate operation. In at least one embodiment, matrices are split into blocks such that a GEMM request will involve a set of operations to be performed at block granularity. A processing pipeline can perform an asynchronous pre-fetch (get) request for the data needed for a future matrix block computation and, at least partially overlapping in time, a local GEMM computation can be performed for the data that was prefetched previously. If at least one computation was previously performed, an accumulate operation can be performed concurrently and in parallel with a current computation and prefetch, where the accumulation can be performed on the respective DPU. This process can continue with prefetch, compute, and accumulate operations being performed in parallel until the GEMM operation has completed for each block of a result matrix, with the data being held locally in the DPU to take advantage of caching. Individual GEMM computations can also be split among multiple workers (e.g., processing units) in at least some embodiments.

Variations of this and other such functionality can be used as well within the scope of the various embodiments as would be apparent to one of ordinary skill in the art in light of the teachings and suggestions contained herein.

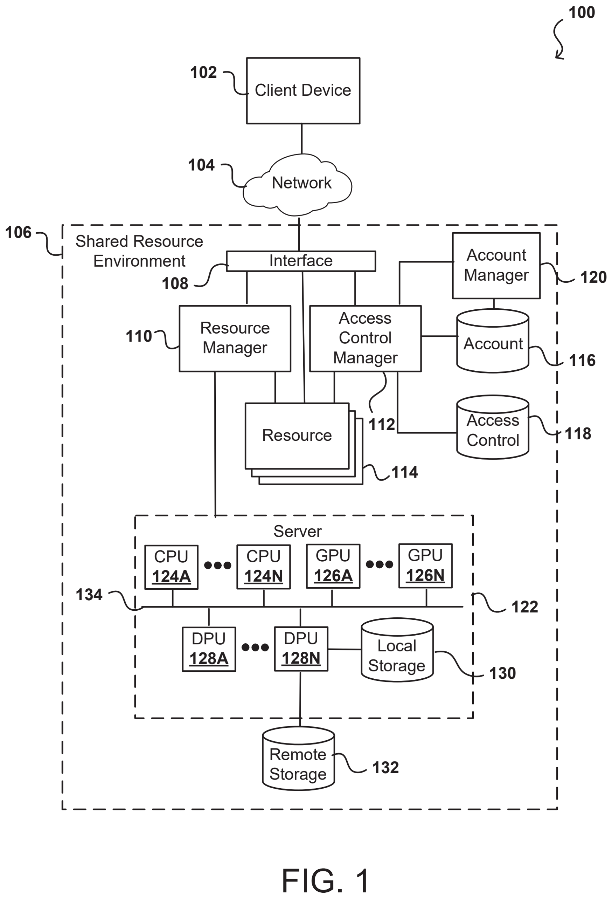

Environments such as data centers can be used to perform various computing operations on behalf of a number of different entities, such as by using a pool of available resource capacity. FIG. 1 illustrates an example of one such architecture 100 that can be used in accordance with at least one embodiment. In this example, a user is able to use a client device 102 to submit one or more requests to access one or more resources, or to perform a task using one or more resources, among other such options. Such a request can be submitted over at least one network 104, such as the Internet or a cellular network, and received to an interface, address, or endpoint in a shared resource environment 106. The request can be received to an interface, such as an application programming interface (API) of an interface layer 108, for example, which may include other networking devices as well, as may include routers, network switches, load balancers, and the like. In this example, a request from a client device 102 may first need to be analyzed to determine whether the client device, user, or other entity associated with the request has access to one or more resources to be used to process the request, as well as to determine whether the type of access permitted allows for performance of the requested operation.

In this example, information for the request can be directed to an access control manager 112, or other such component, system, or service. The access control manager 112 can, alone or in combination with an account manager 120, perform various tasks to determine and/or manage access to a set of shared resources, such as to extract relevant information from a received request and compare information for the request against information in an account repository 116 or other such location. Such operation can be used to determine whether the request is associated with a valid account associated with the shared resource environment, such as an account maintained by a user with a provider of the shared resource environment 106. One determined, that account information can be used to determine the type of access permissible to perform one or more operations associated with the request. This may include, for example, determining (or verifying) an authorized user identifier associated with the request, then using that user identifier to determine access permissions associated with that user identifier, as may be stored in an access control data repository 118 or other such location. In at least one embodiment, an access control manager 112 may include various modules to perform specific tasks, such as an authorization module and an authentication module, or may run on a network server that also has these modules available for use with the access control manager 112, among other such options.

Once a set of access permissions is identified that is associated with the request, the access control manager 112 (or an associated process) can determine whether the necessary permissions exist in the set to process the request which was received from the client device and associated with the user identifier. If the appropriate permissions are determined to exist or be available, the access control manager 112 can direct information for the request to one or more shared resources 114 (and/or potentially dedicated resources) in the shared resource environment 106. In some embodiments, the access control manager 112 may work with a resource manager 110 to determine a specific instance of a type of resource to be used to perform an operation with respect to the request, where the resource manager 110 can perform other types of operations as needed, such as to allocate additional capacity of a type of resource, launch a new compute instance, or perform another such task associated with the request.

In many instances, a request that involves a number of operations to be performed may have those operations, or portions of those operations, distributed across a set of processing resources. This may include distribution across a number of physical compute resources, such as a set of shared servers, and/or may include multiple processing resources (physical or virtual) within a given physical resource. As an example FIG. 1 illustrates example components that may be found within a given server 122 that may be allocated to perform one or more processing tasks with respect to a request. The server 122 in this instance is illustrated to contain different types of processing units, including one or more central processing units (CPUs) 124A-N, one or more graphics processing units (GPUs) 126A-N, and one or more data processing units 128A-N, as may be interconnected using at least one internal bus 134. At least the DPUs 128A-N in this example may be connected to local storage 130 in the server, as well as at least one remote storage instance 132 that may be external to the server but within the shared resource environment 106. CPUs 124A-N are often used for tasks such as single threaded user applications, and GPUs 126A-N are often used to perform multiple small but related operations in parallel. DPUs can be used to offload processing tasks from these CPUs and GPUs that may not optimally be performed on these processing units, as may related to heterogeneous data-centric processing tasks that can benefit from a different type of accelerated processing. A DPU is a programmable processor or system-on-chip, which combines one or more multi-core, high performance CPUs, a set of acceleration engines that can offload and improve performance for data-centric tasks, and one or more high-performance interfaces capable of parsing, processing, and efficiently transferring data at high speeds. A DPU can be used as a stand-alone embedded processor, or can be incorporated into a smart network interface card (SmartNIC) in a server, among other such options. Offloading of appropriate tasks to such DPUs can help to enhance performance and reduce power consumption, among other such benefits. Processing units such as DPUs can be particularly useful for data-centric tasks such as those relating to artificial intelligence and machine learning. This can include the performance of various matrix multiplication tasks, among other such operations.

Approaches in accordance with various illustrative embodiments can provide for acceleration of general matrix multiplication (GEMM) operations using one or more data processing units (DPUs), or other such distributed processing units. As mentioned, accelerated processing can be obtained in part by using a pipeline in which (pre-fetched) data transmission, computation, and accumulation steps can be performed concurrently and in parallel using different processing units. The accumulate operation of an update can be offloaded to a DPU, and matrices can be split into blocks, allowing GEMM (and other such) operations to be performed at block granularity.

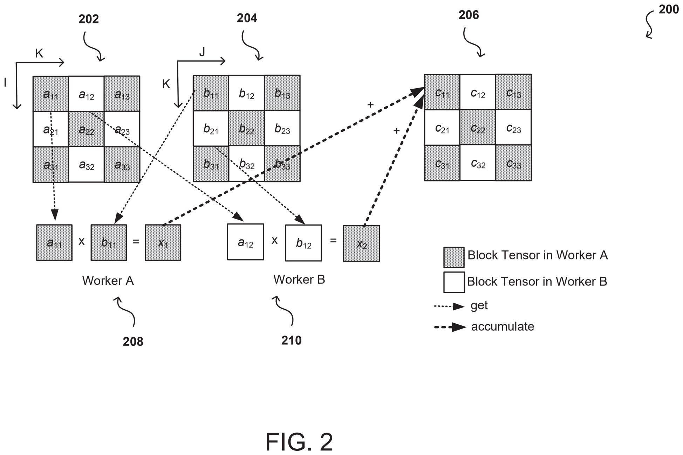

In an example GEMM operation, as illustrated in FIG. 2, there will be two multidimensional matrices (or tensors) 202, 204 that are to be multiplied together. Multiplying two tensors together will result in tensor output (or output matrix) 206 of a dimension that depends on the dimensionality of the matrices being multiplied. In order to attempt to optimize performance, individual operations can be distributed across multiple processors as cell or block values of an output tensor can be calculated individually and independently of the calculation of other cell values of that output tensor. There are several techniques that can be used to optimize a GEMM operation across distributed processors. These techniques typically involve calculating partial data for a portion of the GEMM operation and then performing an accumulation for each point or cell, typically involving local matrix multiplication and a distributed summation operation to get the result. The summation can be performed using an accumulate or reduce operation in at least one embodiment. A target process can perform polling to determine progress of the GEMM operation. If DPU offload is used for such an operation, this progress determination and target computation can be offloaded to DPU, freeing up the target cores to perform other computations or operations. In at least one embodiment, all local operations can be performed on the target core, with the accumulate and progress operations being offloaded to DPU.

As mentioned, general matrix multiplication (GEMM) is one of the fundamental linear algebra operations in which two matrices are multiplied using the following formula:

$$C = \alpha A \times B + \beta C,$$

where A, B, and C can be multi-dimensional dense tensors, and $\alpha$ and $\beta$ are scalar inputs. The A tensor 202, B tensor 204, and C tensor 206 can be divided into several blocks, and these block tensors can be distributed equally across processes. This may include, for example, distribution across one or more workers 208, 210, as illustrated in the configuration 200 of FIG. 2. Each participating process can fetch A blocks and B blocks either from a different process or itself, as may be based in part on the locality. Each process can also perform the local block-wise computation, such as a GEMM computation, and generate the partial result. As the C tensor is also distributed, the partial result can be accumulated to a corresponding target process.

Operations such as GEMM can be used in a wide spectrum of applications, ranging from large-scale scientific simulations to big data analytics and deep neural networks. GEMM operations can be performed efficiently in such a distributed setup using various methodologies, including MapReduce-based GEMM and Distributed Block Cyclic Decomposition, among others. A summation or accumulation operation is one of the fundamental steps for many GEMM-based approaches, as there is a need to combine the partial results computed in different processes into the final output tensor C 206. Moreover, the output tensor C 206 will often be distributed across multiple processes and then require reduce or accumulate operations, such as MPI_Reduce or MPI_Accumulate-like operations that may be used for Message Passing Interface (MPI)-based implementations that involve a mix of put and update semantics. MPI Accumulate can typically be expressed in a more fine-grained and non-blocking fashion than MPI_Reduce. Most of the available methodologies use computation cores on CPUs or GPUs to perform the accumulation operation. Also, additional cycles get wasted for the communication progress mechanism as well as non-availability of the CPU/GPU cores to perform the summation operation might cause delays due to synchronization.

Approaches in accordance with at least one embodiment can free up the cores used for communication and accumulate operation, which can then be used for the local GEMM operation. As mentioned, in at least one such approach GEMM-type operations can be performed in part using DPUs (or other programmable processors) that can handle data-intensive tasks, and specifically are able to accelerate and optimize data-centric operations. One approach that can be used to perform block-wise GEMM operations in a distributed deployment is by using a pattern, such as a Get-Compute-Update pattern as will be discussed in more detail subsequently herein.

Optimizations can be performed with respect to at least the update step of the GEMM operation. In at least one embodiment, optimization can be achieved by offloading the accumulate operation of the update to a data processing unit (DPU), such as a Bluefield Data Processing Unit (DPU) from NVIDIA Corporation. Such an approach can take advantage of the asynchronous nature of the accumulate operation. In at least one embodiment, an accumulate operation can be formulated as a remote direct memory operation (RDMO) that utilizes DPU offload to enable finer-grained computation-communication overlap. RDMO can be viewed as the restricted offload of active message (AM) callbacks to a communication device, such as the corresponding DPU. Offloading the accumulate operation allows for host resources to be freed, at least in part, by shifting the progress functionality to the DPU cores, as well as allowing independent and prompt progress of the offloaded operations leading to lower synchronization overhead. During an example accumulate operation, an origin process can send an RDMO request to a worker that corresponds to the target process. This can be a DOCA unified resource and offload manager (UROM) RDMO worker, of the DOCA software framework from NVIDIA Corporation, in at least one embodiment. The worker can perform the respective accumulate operation. Depending in part on the size of the message, the origin data can be sent in line with the RDMO request or be fetched by the RDMO worker at the target, such as by using a one-sided get request. The target worker can leverage the temporal locality of the operation by caching intermediate results in memory on the DPU. To allow for the non-blocking nature of the accumulate operation, multiple buffers can be used on the origin side to delay the local flush operation, which can help to ensure that the origin buffer is available to be reused, and that an appropriate callback is invoked for the summation of origin data with the target data. The target data can be fetched during the first invocation and cached in the DPU until a flush-all call is invoked (or similar occurrence). A flush-all call can be invoked once at the end of the GEMM loop, for example, which can help to ensure that the DPU caches are synchronized with the target memory. After such global synchronization, the element in the C tensor 206 can be caused to be modified with the updated result of the entire GEMM operation.

In FIG. 2, both matrix A 202 and matrix B 204 (and output matrix C 206) are 3x3 matrices. Each of these elements in this block-based approach is not a single element but rather a tile of size $i, j$. In this example, the shaded blocks are hosted by worker A 208, and the non-shaded blocks are hosted by worker B 210. The work can then be distributed using some logic (i.e. block-cyclic distribution). For the tile $C_{11}$ in the output matrix 206, each tile in the top row of matrix A 202 will need to be multiplied by the tiles of the first column of matrix B 204, with the results being accumulated into a final tile $C_{11}$. The two assigned workers can generate these intermediate results that are then accumulated into the output matrix values.

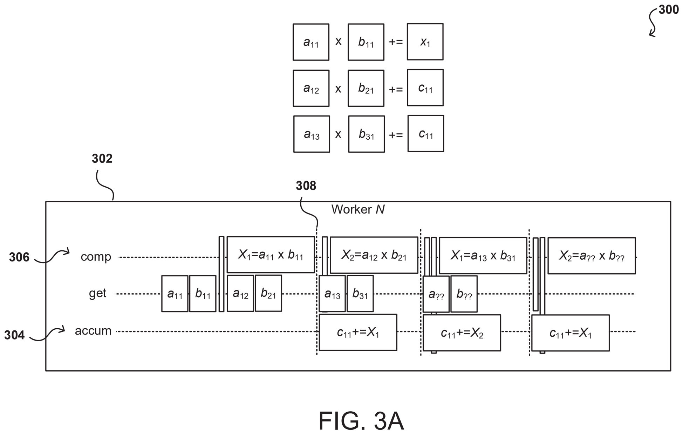

FIG. 3A illustrates an example prefetching-based pipeline 300 that can be used in accordance with at least one embodiment. Such a pipeline 300 is built of a non-blocking get, local GEMM compute, and non-blocking update operations that enable computation communication overlap. As illustrated in this example, the pipeline can involve performing such operations at least partially in parallel using prefetched data, where these operations can be performed within (or by) a given worker 302. In such a process, the data for a next computation can be pre-fetched during a current computation, so that data retrieval is spread out over the series of computations but always available for a next computation when needed. Such an approach can also perform accumulate operations for prior computation results while a current computation is being performed. As mentioned, in at least one embodiment the get, compute, and accumulate operations may be performed by different processing units. Such an approach can allow for overlap of the communication progress and the accumulate operations on DPU with the block-wise GEMM computation happening on the processor (CPU/GPU) cores. Such operation can achieve a significant overall runtime reduction with respect to implementations that do not take advantage of such DPU offload. There can be a synchronization point 308 after each computation, which can be used to ensure that the prefetched data is available for the next computation.

In at least one embodiment, a fire and forget approach can be used where an accumulate operation 304 is fired with the partial result after local GEMM computation 306 without the requirement of immediate target memory update for the block C tensor. A memory caching mechanism can be used to replicate the target memory segment for the C matrix on DPU. The accumulate operations for a particular C block can be performed independently on DPU. At the same time, a next block-wise local GEMM computation can occur on the CPU/GPU compute cores, allowing for better computation-communication overlap. Moreover, a local block-wise GEMM operation can use more cores with such an approach, without getting blocked by accumulate operation as the communication progress engine and reduction/accumulation operation is offloaded to DPUs. A caching mechanism on a target DPU can be used to cache data during these operations, and a global flushing operation can be performed in a single synchronization operation after aggregation.

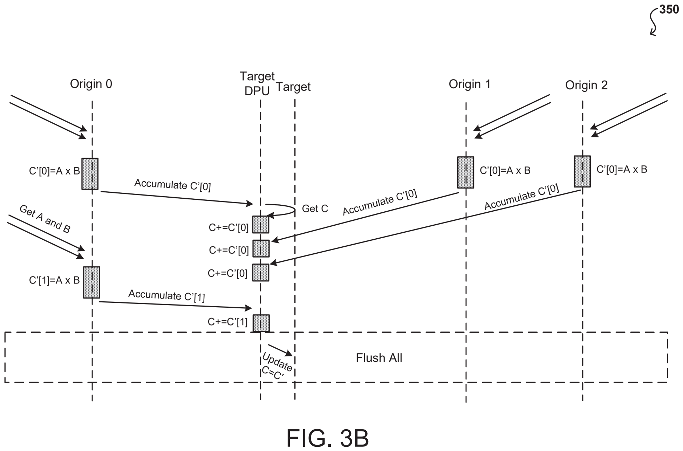

FIG. 3B illustrates an example process flow diagram 350 that can be performed by a prefetching matrix multiplication pipeline such as that illustrated in FIG. 3A. Such a process can include at least one target process and a number (e.g., 3) of origin processes, as well as at least one target DPU that can be used to offload accumulate operations. A pair of get requests can be performed at appropriate times for the individual origin processes, where each get request to prefetch data can be followed by a respective GEMM compute, and then an accumulate operation that uses results of the computation performed on the retrieved data from that pair of requests. As mentioned, the results of the computations can be sent to the target DPU to perform the accumulation operation concurrently with other GEMM calculations to be performed by the origin processes. Prefetching can be performed two blocks at a time in at least one embodiment, shortly before the data from those blocks is needed for the next computation. The prefetching of the next two blocks of data (and accumulation with respect to a prior computation, if available) can then be performed after completion of the synchronization. Such a process can hide the get operation for the next block, as well as the accumulate operation for the previous block. The buffer or cache can be reusable. If a local flush is performed, data will be transferred from the origin to the target DPU, with the buffer ($X_1$ or $X_2$) then being available for reuse. In the example of FIG. 3A, there are two buffers $X_1$ or $X_2$ used, and the pipeline can alternate between use of those two buffers. And at the end of the process there can be a synchronization between the target DPU and the target host. A flushing of all buffers and/or caches used for the process can then be performed.

In at least one embodiment, the size of tiles used in a GEMM operation can be a tunable parameter.

The tile size can be selected to balance throughput and storage, for example, as well as to ensure that such a process can hide the transfer and accumulate cost by overlapping it with the tile-wise GEMM operations. The appropriate value may then need to be separately tuned for different types of calculations or operations. The number of processing nodes used can also be a tunable parameter for similar considerations. As an example, there may be a different optimal block size and number of nodes used for scientific simulation than when used for matrix operations performed for a linear or prediction layer used in training a transformer or other deep learning model. Other optimization approaches can be used for different calculations as well, such as to modify the number of prefetch operations performed as well as fetching (and caching) more data for each such operation. There may be different amounts or types of overlap as well. Such a pipeline allows computation operations to be overlapped with accumulate operations, which can provide a performance improvement because operations do not need to be performed sequentially, but in at least one embodiment it may not be necessary to perform an accumulate after every computation if the computation results are able to be cached or buffered as needed.

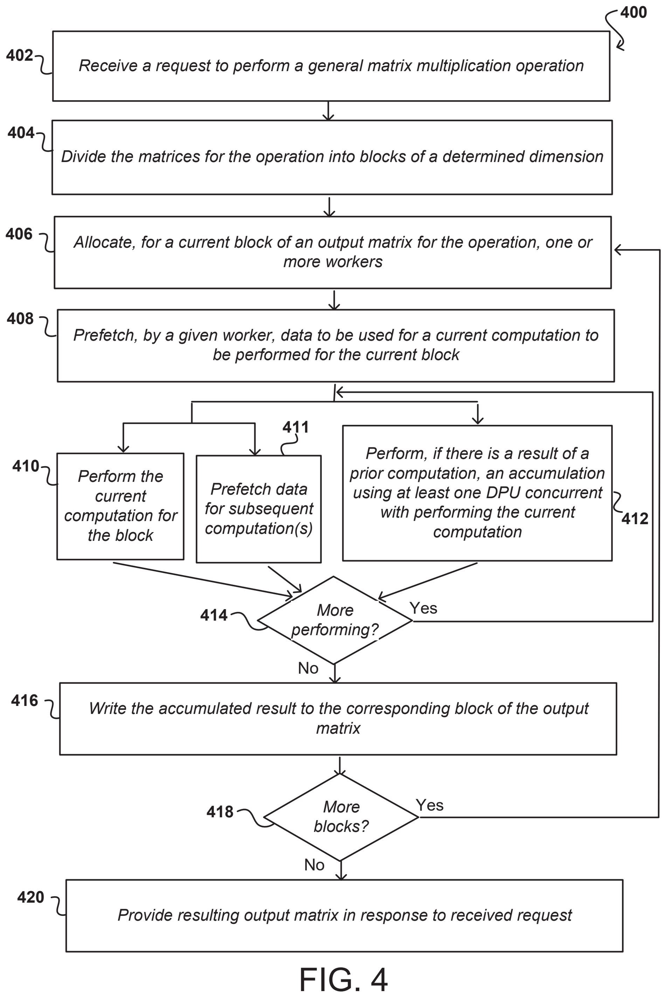

FIG. 4 illustrates an example process 400 that can be performed to perform an operation such as matrix multiplication using one or more offload operations, in accordance with at least one embodiment. It should be understood that for this and other processes discussed herein that there may be additional, fewer, or alternative steps performed in similar or alternative orders, or at least partially in parallel, within the scope of the various embodiments. Further, although discussed with respect to matrix multiplication, for example, it should be understood that advantages of such a process can be obtained for other types of operations or calculations as well within the scope of various embodiments. In this example process, a request can be received 402 on behalf of (or otherwise associated with) a user or other entity having at least some level of access to resources in a shared resource environment. The request in this example involves the execution of a general matrix multiplication (or similar) operation. As part of the operation, the input matrices can be identified and then divided 404 or segmented into blocks of a determined dimension, which can produce block-based input matrices with a smaller number of blocks than cells of the input matrix. For example, each block may contain 9 cells (3x3 cells) of an input matrix. As part of the matrix multiplication operation, blocks of the first matrix will need to be multiplied by blocks of the second matrix, and for that each such pair of blocks can be directed to a worker (such as a compute instance) for a local GEMM operation, with the result being accumulated to a corresponding output block of the output (or result) matrix. A set of computations and accumulations can then be performed for each block of the output matrix. Accordingly, one or more workers can be allocated 406 for a current block of the output matrix, where the same or different workers may be assigned for different blocks of the output matrix, particularly where at least some of the computations for different output blocks are to be performed concurrently, or at least partially overlapping in time.

For each block of the output matrix, one or more workers can be assigned that can handle individual block calculations. Data to be used for a current computation to be performed for the current block can be prefetched 408 by, or for, a respective worker. Depending on the stage of the computation and accumulation process, there may be one or more steps performed after this prefetching. As an example, the current computation using this prefetched data can be performed 410 once the data is available. If there is a subsequent computation to be performed for the current block, then an additional prefetch 411 of data can be performed while the current computation is being performed, where that data will be used for the subsequent computation. Further, if there is a result of a prior computation, an accumulation can be performed 412 for the prior block using at least one offload DPU, where the accumulation can be performed concurrent with the current computation. This process can continue, with prefetching, computation, and accumulation operations being able to be performed in a parallel manner that at least partially overlaps in time, with the accumulation being offloaded to a target DPU. In at least one embodiment, prefetching can be offloaded and the approach can rely on, for example, an RDMA GET operation. A determination can be made 414 as to whether there is more performing for the current block, such as where there is at least one additional computation or accumulation to be performed. If so, the process can continue with the next prefetch, computation, and/or accumulation operation for the current block. As mentioned, a synchronization point may be used between such parallel operations. If the performance for a current block has completed, such as where a final accumulation has been performed, then the accumulated result can be written 416 to the corresponding block of the output matrix, and a flush can be performed as appropriate. In some embodiments, the writing of the accumulated result (as illustrated in step 416) can be omitted if the entire output matrix can fit in DPU memory or another such location. A determination can be made 418 as to whether there are additional blocks of the output matrix for which computations are to be performed. As mentioned, in some embodiments computations for different blocks of an output matrix may be performed sequentially, in parallel, or a combination thereof. If there is at least one more block for which computations are to be performed then the process can move on to a next block. If results have been obtained for all of the blocks of the output matrix then the resulting output matrix can be provided 420 in response to the initial received request. The result can then be used as appropriate, such as to help train a transformer network, etc.

In at least some of these examples, the computing and/or electronic devices that may request or obtain access to various resources to perform GEMM-type operations can include a variety of different devices, as may include a desktop computer, notebook computer, set-top box, streaming device, gaming console, smartphone, tablet computer, VR headset, AR goggles, wearable computer, or a smart television. In at least one embodiment, such a system can be used for performing graphical rendering operations. In other embodiments, such a system can be used for other purposes, such as for providing image or video content to test or validate autonomous machine applications, or for performing deep learning operations. In at least one embodiment, such a system can be implemented using an edge device or may incorporate one or more Virtual Machines (VMs). In at least one embodiment, such a system can be implemented at least partially in a data center or at least partially using cloud computing resources.

DATA CENTER

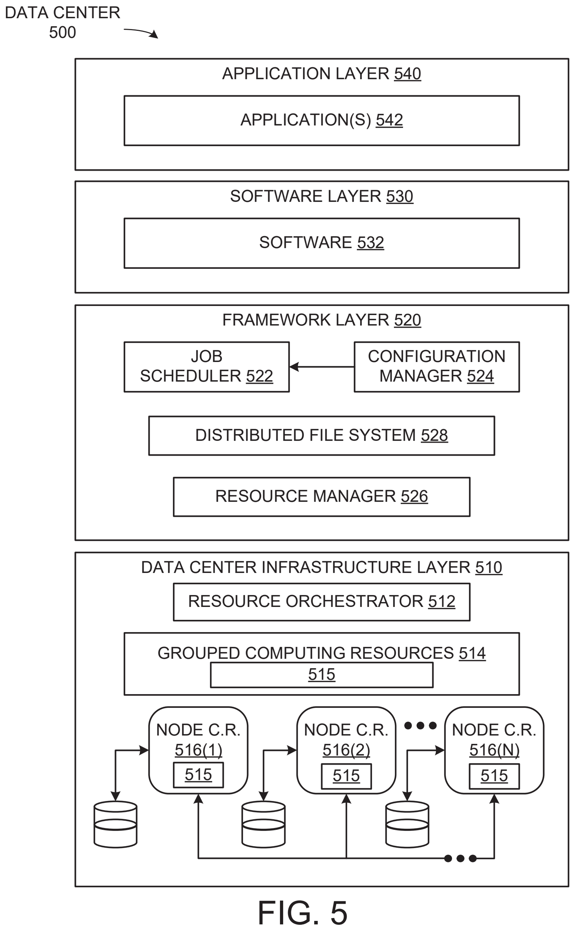

FIG. 5 illustrates an example data center 500, in which at least one embodiment may be used. In at least one embodiment, data center 500 includes a data center infrastructure layer 510, a framework layer 520, a software layer 530 and an application layer 540.

In at least one embodiment, as shown in FIG. 5, data center infrastructure layer 510 may include a resource orchestrator 512, grouped computing resources 514, and node computing resources ("node C.R.s") 516(1)-516(N), where "N" represents a positive integer (which may be a different integer "N" than used in other figures). In at least one embodiment, node C.R.s 516(1)-516(N) may include, but are not limited to, any number of central processing units ("CPUs") or other processors (including accelerators, field programmable gate arrays (FPGAs), graphics processors, etc.), memory storage devices 518(1)-518(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 516(1)-816(N) may be a server having one or more of above-mentioned computing resources.

In at least one embodiment, grouped computing resources 514 may include separate groupings of node C.R.s housed within one or more racks (not shown), or many racks housed in data centers at various geographical locations (also not shown). In at least one embodiment, separate groupings of node C.R.s within grouped computing resources 514 may include grouped compute, network, memory or storage resources that may be configured or allocated to support one or more workloads. In at least one embodiment, several node C.R.s including CPUs or processors may be grouped within one or more racks to provide compute resources to support one or more workloads. In at least one embodiment, one or more racks may also include any number of power modules, cooling modules, and network switches, in any combination.

In at least one embodiment, resource orchestrator 512 may configure or otherwise control one or more node C.R.s 516(1)-516(N) and/or grouped computing resources 514. In at least one embodiment, resource orchestrator 512 may include a software design infrastructure ("SDI") management entity for data center 500. In at least one embodiment, resource orchestrator 512 may include hardware, software or some combination thereof.

In at least one embodiment, as shown in FIG. 5, framework layer 520 includes a job scheduler 522, a configuration manager 524, a resource manager 526 and a distributed file system 528. In at least one embodiment, framework layer 520 may include a framework to support software 532 of software layer 530 and/or one or more application(s) 542 of application layer 540. In at least one embodiment, software 532 or application(s) 542 may respectively include web-based service software or applications, such as those provided by Amazon Web Services, Google Cloud and Microsoft Azure. In at least one embodiment, framework layer 520 may be, but is not limited to, a type of free and open-source software web application framework such as Apache Spark™ (hereinafter "Spark") that may utilize distributed file system 528 for large-scale data processing (e.g., "big data"). In at least one embodiment, job scheduler 522 may include a Spark driver to facilitate scheduling of workloads supported by various layers of data center 500. In at least one embodiment, configuration manager 524 may be capable of configuring different layers such as software layer 530 and framework layer 520 including Spark and distributed file system 528 for supporting large-scale data processing. In at least one embodiment, resource manager 526 may be capable of managing clustered or grouped computing resources mapped to or allocated for support of distributed file system 528 and job scheduler 522. In at least one embodiment, clustered or grouped computing resources may include grouped computing resources 514 at data center infrastructure layer 510. In at least one embodiment, resource manager 526 may coordinate with resource orchestrator 512 to manage these mapped or allocated computing resources.

In at least one embodiment, software 532 included in software layer 530 may include software used by at least portions of node C.R.s 516(1)-516(N), grouped computing resources 514, and/or distributed file system 528 of framework layer 520. In at least one embodiment, one or more types of software may include, but are not limited to, Internet web page search software, e-mail virus scan software, database software, and streaming video content software.

In at least one embodiment, application(s) 542 included in application layer 540 may include one or more types of applications used by at least portions of node C.R.s 516(1)-516(N), grouped computing resources 514, and/or distributed file system 528 of framework layer 520. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 524, resource manager 526, and resource orchestrator 512 may implement any number and type of self-modifying actions based on any amount and type of data acquired in any technically feasible fashion. In at least one embodiment, self-modifying actions may relieve a data center operator of data center 500 from making possibly bad configuration decisions and possibly avoiding underutilized and/or poor performing portions of a data center.

In at least one embodiment, data center 500 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 500. In at least one embodiment, trained machine learning models corresponding to one or more neural networks may be used to infer or predict information using resources described above with respect to data center 500 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 515 are used to perform inferencing and/or training operations associated with one or more embodiments. In at least one embodiment, inference and/or training logic 515 may be used in system FIG. 5 for inferencing or predicting operations based, at least in part, on weight parameters calculated using neural network training operations, neural network functions and/or architectures, or neural network use cases described herein.

Embodiments presented herein can prefetch data for individual block computations of a GEMM operation, and can offload accumulations to at least one target DPU, allowing fetching, computation, and accumulation to be performed concurrently and efficiently.

COMPUTER SYSTEMS

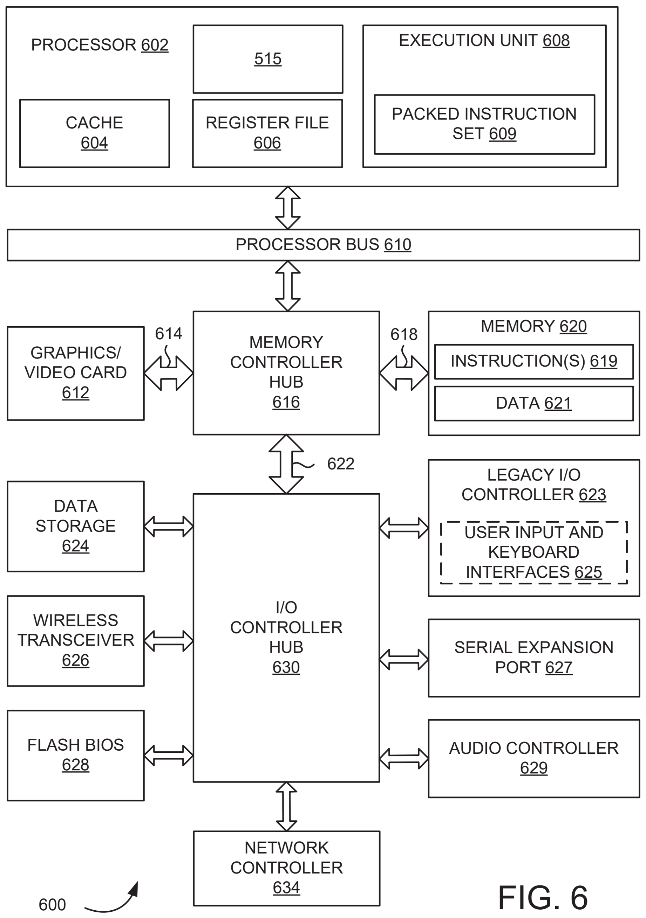

FIG. 6 is a block diagram illustrating an exemplary computer system, which may be a system with interconnected devices and components, a system-on-a-chip (SOC) or some combination thereof formed with a processor that may include execution units to execute an instruction, according to at least one embodiment. In at least one embodiment, a computer system 600 may include, without limitation, a component, such as a processor 602 to employ execution units including logic to perform algorithms for process data, in accordance with present disclosure, such as in embodiment described herein. In at least one embodiment, computer system 600 may include processors, such as PENTIUM® Processor family, Xeon™, Itanium®, Scale™ and/or StrongARM™, Intel® Core™, or Intel® Nirvana™ microprocessors available from Intel Corporation of Santa Clara, California, although other systems (including PCs having other microprocessors, engineering workstations, set-top boxes and like) may also be used. In at least one embodiment, computer system 600 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("Necks"), set-top boxes, network hubs, wide area network ("WAN") switches, or any other system that may perform one or more instructions in accordance with at least one embodiment.

In at least one embodiment, computer system 600 may include, without limitation, processor 602 that may include, without limitation, one or more execution units 608 to perform machine learning model training and/or inferencing according to techniques described herein. In at least one embodiment, computer system 600 is a single processor desktop or server system, but in another embodiment, computer system 600 may be a multiprocessor system. In at least one embodiment, processor 602 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 602 may be coupled to a processor bus 610 that may transmit data signals between processor 602 and other components in computer system 600.

In at least one embodiment, processor 602 may include, without limitation, a Level 1 ("L1") internal cache memory ("cache") 604. In at least one embodiment, processor 602 may have a single internal cache or multiple levels of internal cache. In at least one embodiment, cache memory may reside external to processor 602. Other embodiments may also include a combination of both internal and external caches depending on particular implementation and needs. In at least one embodiment, a register file 606 may store different types of data in various registers including, without limitation, integer registers, floating point registers, status registers, and an instruction pointer register.

In at least one embodiment, execution unit 608, including, without limitation, logic to perform integer and floating point operations, also resides in processor 602. In at least one embodiment, processor 602 may also include a microcode ("code") read only memory ("ROM") that stores microcode for certain macro instructions. In at least one embodiment, execution unit 608 may include logic to handle a packed instruction set 609. In at least one embodiment, by including packed instruction set 609 in an instruction set of a general-purpose processor, along with associated circuitry to execute instructions, operations used by many multimedia applications may be performed using packed data in processor 602. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, execution unit 608 may also be used in microcontrollers, embedded processors, graphics devices, DSPs, and other types of logic circuits. In at least one embodiment, computer system 600 may include, without limitation, a memory 620. In at least one embodiment, memory 620 may be a Dynamic Random Access Memory ("DRAM") device, a Static Random Access Memory ("SRAM") device, a flash memory device, or another memory device. In at least one embodiment, memory 620 may store instruction(s) 619 and/or data 621 represented by data signals that may be executed by processor 602.

In at least one embodiment, a system logic chip may be coupled to processor bus 610 and memory 620. In at least one embodiment, a system logic chip may include, without limitation, a memory controller hub ("MCH") 616, and processor 602 may communicate with MCH 616 via processor bus 610. In at least one embodiment, MCH 616 may provide a high bandwidth memory path 618 to memory 620 for instruction and data storage and for storage of graphics commands, data, and textures. In at least one embodiment, MCH 616 may direct data signals between processor 602, memory 620, and other components in computer system 600 and to bridge data signals between processor bus 610, memory 620, and a system I/O interface 622. In at least one embodiment, a system logic chip may provide a graphics port for coupling to a graphics controller. In at least one embodiment, MCH 616 may be coupled to memory 620 through high bandwidth memory path 618 and a graphics/video card 612 may be coupled to MCH 616 through an Accelerated Graphics Port ("AGP") interconnect 614.

In at least one embodiment, computer system 600 may use system I/O interface 622 as a proprietary hub interface bus to couple MCH 616 to an I/O controller hub ("ICH") 630. In at least one embodiment, ICH 630 may provide direct connections to some I/O devices via a local I/O bus. In at least one embodiment, a local I/O bus may include, without limitation, a high-speed I/O bus for connecting peripherals to memory 620, a chipset, and processor 602. Examples may include, without limitation, an audio controller 629, a firmware hub ("flash BIOS") 628, a wireless transceiver 626, a data storage 624, a legacy I/O controller 623 containing user input and keyboard interfaces 625, a serial expansion port 627, such as a Universal Serial Bus ("USB") port, and a network controller 634. In at least one embodiment, data storage 624 may comprise a hard disk drive, a floppy disk drive, a CD-ROM device, a flash memory device, or other mass storage device.

In at least one embodiment, FIG. 6 illustrates a system, which includes interconnected hardware devices or "chips", whereas in other embodiments, FIG. 6 may illustrate an exemplary SoC In at least one embodiment, devices illustrated in FIG. 6 may be interconnected with proprietary interconnects, standardized interconnects (e.g., PCIe) or some combination thereof. In at least one embodiment, one or more components of computer system 600 are interconnected using compute express link (CXL) interconnects.

Inference and/or training logic 515 are used to perform inferencing and/or training operations associated with one or more embodiments. In at least one embodiment, inference and/or training logic 515 may be used in system FIG. 6 for inferencing or predicting operations based, at least in part, on weight parameters calculated using neural network training operations, neural network functions and/or architectures, or neural network use cases described herein.

Embodiments presented herein can prefetch data for individual block computations of a GEMM operation, and can offload accumulations to at least one target DPU, allowing fetching, computation, and accumulation to be performed concurrently and efficiently.

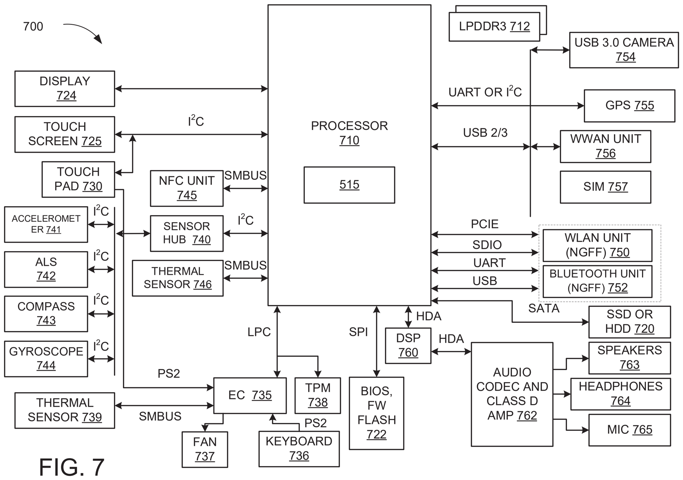

FIG. 7 is a block diagram illustrating an electronic device 700 for utilizing a processor 710, according to at least one embodiment. In at least one embodiment, electronic device 700 may be, for example and without limitation, a notebook, a tower server, a rack server, a blade server, a laptop, a desktop, a tablet, a mobile device, a phone, an embedded computer, or any other suitable electronic device.

In at least one embodiment, electronic device 700 may include, without limitation, processor 710 communicatively coupled to any suitable number or kind of components, peripherals, modules, or devices. In at least one embodiment, processor 710 is coupled using a bus or interface, such as a I2C bus, a System Management Bus ("Sambas"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3, etc.), or a Universal Asynchronous Receiver/Transmitter ("UART") bus. In at least one embodiment, FIG. 7 illustrates a system, which includes interconnected hardware devices or "chips", whereas in other embodiments, FIG. 7 may illustrate an exemplary SoC. In at least one embodiment, devices illustrated in FIG. 7 may be interconnected with proprietary interconnects, standardized interconnects (e.g., PCIe) or some combination thereof. In at least one embodiment, one or more components of FIG. 7 are interconnected using compute express link (CXL) interconnects.

In at least one embodiment, FIG. 7 may include a display 724, a touch screen 725, a touch pad 730, a Near Field Communications unit ("NFC") 745, a sensor hub 740, a thermal sensor 746, an Express Chipset ("EC") 735, a Trusted Platform Module ("TPM") 738, BIOS/firmware/flash memory ("BIOS, FW Flash") 722, a DSP 760, a drive 720 such as a Solid State Disk ("SSD") or a Hard Disk Drive ("HDD"), a wireless local area network unit ("WLAN") 750, a Bluetooth unit 752, a Wireless Wide Area Network unit ("WWAN") 756, a Global Positioning System (GPS) unit 755, a camera ("USB 3.0 camera") 754 such as a USB 3.0 camera, and/or a Low Power Double Data Rate ("LPDDR") memory unit ("LPDDR3") 715 implemented in, for example, an LPDDR3 standard. These components may each be implemented in any suitable manner.

In at least one embodiment, other components may be communicatively coupled to processor 710 through components described herein. In at least one embodiment, an accelerometer 741, an ambient light sensor ("ALS") 742, a compass 743, and a gyroscope 744 may be communicatively coupled to sensor hub 740. In at least one embodiment, a thermal sensor 739, a fan 737, a keyboard 736, and touch pad 730 may be communicatively coupled to EC 735. In at least one embodiment, speakers 763, headphones 764, and a microphone ("mic") 765 may be communicatively coupled to an audio unit ("audio codec and class D amp") 762, which may in turn be communicatively coupled to DSP 760. In at least one embodiment, audio unit 762 may include, for example and without limitation, an audio coder/decoder ("codec") and a class D amplifier. In at least one embodiment, a SIM card ("SIM") 757 may be communicatively coupled to WWAN unit 756. In at least one embodiment, components such as WLAN unit 750 and Bluetooth unit 752, as well as WWAN unit 756 may be implemented in a Next Generation Form Factor ("NGFF").

Inference and/or training logic 515 are used to perform inferencing and/or training operations associated with one or more embodiments. In at least one embodiment, inference and/or training logic 515 may be used in system FIG. 7 for inferencing or predicting operations based, at least in part, on weight parameters calculated using neural network training operations, neural network functions and/or architectures, or neural network use cases described herein.

Embodiments presented herein can prefetch data for individual block computations of a GEMM operation, and can offload accumulations to at least one target DPU, allowing fetching, computation, and accumulation to be performed concurrently and efficiently.

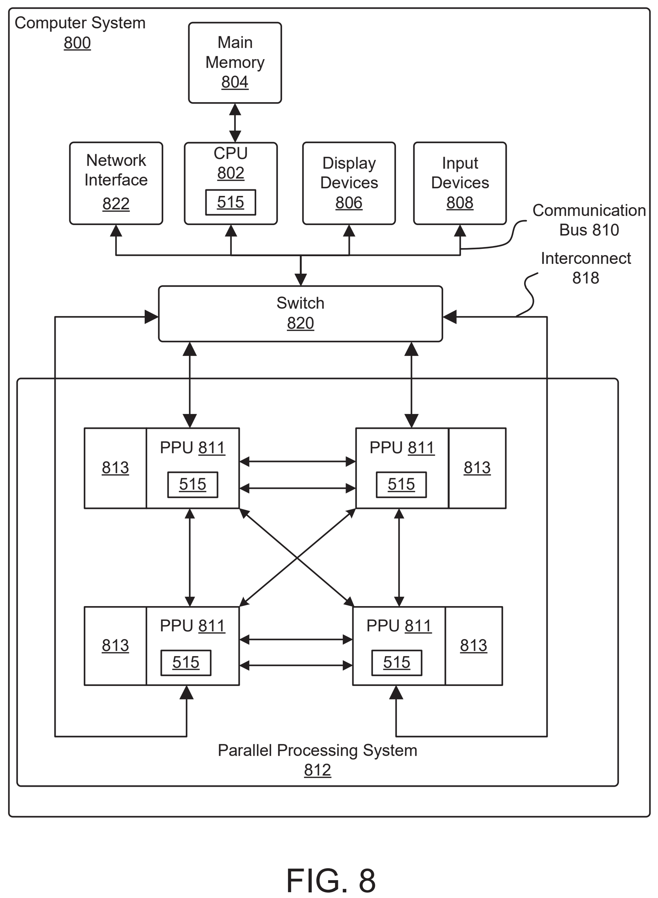

FIG. 8 illustrates a computer system 800, according to at least one embodiment. In at least one embodiment, computer system 800 is configured to implement various processes and methods described throughout this disclosure.

In at least one embodiment, computer system 800 comprises, without limitation, at least one central processing unit ("CPU") 802 that is connected to a communication bus 810 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 800 includes, without limitation, a main memory 804 and control logic (e.g., implemented as hardware, software, or a combination thereof) and data are stored in main memory 804, which may take form of random access memory ("RAM"). In at least one embodiment, a network interface subsystem ("network interface") 822 provides an interface to other computing devices and networks for receiving data from and transmitting data to other systems with computer system 800.

In at least one embodiment, computer system 800, in at least one embodiment, includes, without limitation, input devices 808, a parallel processing system 812, and display devices 806 that can be implemented using a conventional cathode ray tube ("CRT"), a liquid crystal display ("LCD"), a light emitting diode ("LED") display, a plasma display, or other suitable display technologies. In at least one embodiment, user input is received from input devices 808 such as keyboard, mouse, touchpad, microphone, etc. In at least one embodiment, each module described herein can be situated on a single semiconductor platform to form a processing system.

Inference and/or training logic 515 are used to perform inferencing and/or training operations associated with one or more embodiments. In at least one embodiment, inference and/or training logic 515 may be used in system FIG. 8 for inferencing or predicting operations based, at least in part, on weight parameters calculated using neural network training operations, neural network functions and/or architectures, or neural network use cases described herein.

Embodiments presented herein can prefetch data for individual block computations of a GEMM operation, and can offload accumulations to at least one target DPU, allowing fetching, computation, and accumulation to be performed concurrently and efficiently.

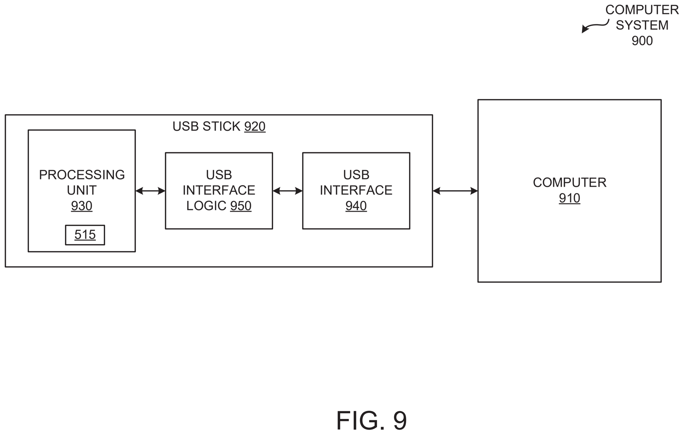

FIG. 9 illustrates a computer system 900, according to at least one embodiment. In at least one embodiment, computer system 900 includes, without limitation, a computer 910 and a USB stick 920. In at least one embodiment, computer 910 may include, without limitation, any number and type of processor(s) (not shown) and a memory (not shown). In at least one embodiment, computer 910 includes, without limitation, a server, a cloud instance, a laptop, and a desktop computer.

In at least one embodiment, USB stick 920 includes, without limitation, a processing unit 930, a USB interface 940, and USB interface logic 950. In at least one embodiment, processing unit 930 may be any instruction execution system, apparatus, or device capable of executing instructions. In at least one embodiment, processing unit 930 may include, without limitation, any number and type of processing cores (not shown). In at least one embodiment, processing unit 930 comprises an application specific integrated circuit ("ASIC") that is optimized to perform any amount and type of operations associated with machine learning. For instance, in at least one embodiment, processing unit 930 is a tensor processing unit ("TPC") that is optimized to perform machine learning inference operations. In at least one embodiment, processing unit 930 is a vision processing unit ("VPU") that is optimized to perform machine vision and machine learning inference operations.

In at least one embodiment, USB interface 940 may be any type of USB connector or USB socket. For instance, in at least one embodiment, USB interface 940 is a USB 3.0 Type-C socket for data and power. In at least one embodiment, USB interface 940 is a USB 3.0 Type-A connector. In at least one embodiment, USB interface logic 950 may include any amount and type of logic that enables processing unit 930 to interface with devices (e.g., computer 910) via USB interface 940.

Inference and/or training logic 515 are used to perform inferencing and/or training operations associated with one or more embodiments. In at least one embodiment, inference and/or training logic 515 may be used in system FIG. 9 for inferencing or predicting operations based, at least in part, on weight parameters calculated using neural network training operations, neural network functions and/or architectures, or neural network use cases described herein.

Embodiments presented herein can prefetch data for individual block computations of a GEMM operation, and can offload accumulations to at least one target DPU, allowing fetching, computation, and accumulation to be performed concurrently and efficiently.

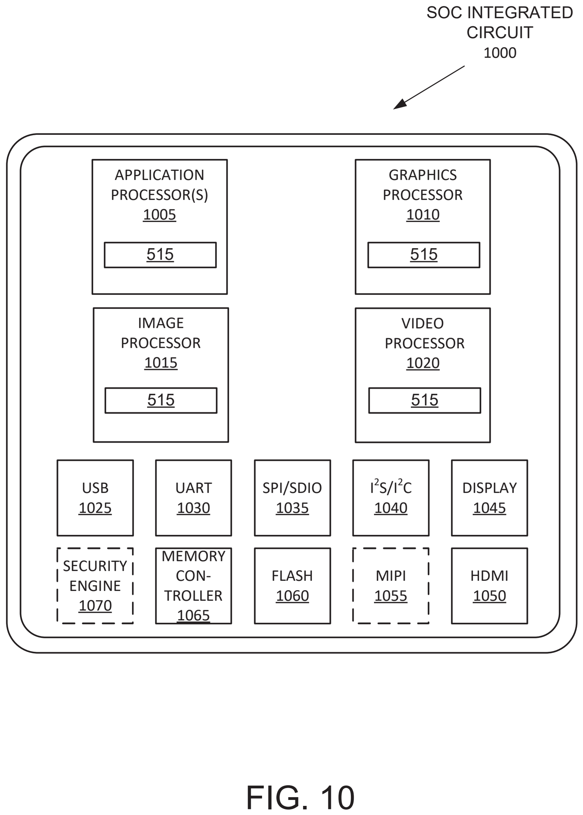

FIG. 10 illustrates exemplary integrated circuits and associated graphics processors that may be fabricated using one or more IP cores, according to various embodiments described herein. In addition to what is illustrated, other logic and circuits may be included in at least one embodiment, including additional graphics processors/cores, peripheral interface controllers, or general-purpose processor cores.

FIG. 10 is a block diagram illustrating an exemplary system-on-a-chip (SOC) integrated circuit 1000 that may be fabricated using one or more IP cores, according to at least one embodiment. In at least one embodiment, SOC integrated circuit 1000 includes one or more application processor(s) 1005 (e.g., CPUs), at least one graphics processor 1010, and may additionally include an image processor 1015 and/or a video processor 1020, any of which may be a modular IP core. In at least one embodiment, SOC integrated circuit 1000 includes peripheral or bus logic including a USB controller 1025, a UART controller 1030, an SPI/SDIO controller 1035, and an $I^2S/I^2C$ controller 1040. In at least one embodiment, SOC integrated circuit 1000 can include a display device 1045 coupled to one or more of a high-definition multimedia interface (HDMI) controller 1050 and a mobile industry processor interface (MIPI) display interface 1055. In at least one embodiment, storage may be provided by a flash memory subsystem 1060 including flash memory and a flash memory controller. In at least one embodiment, a memory interface may be provided via a memory controller 1065 for access to SDRAM or SRAM memory devices. In at least one embodiment, some integrated circuits additionally include an embedded security engine 1070.

Inference and/or training logic 515 are used to perform inferencing and/or training operations associated with one or more embodiments. In at least one embodiment, inference and/or training logic 515 may be used in SOC integrated circuit 1000 for inferencing or predicting operations based, at least in part, on weight parameters calculated using neural network training operations, neural network functions and/or architectures, or neural network use cases described herein.

Embodiments presented herein can prefetch data for individual block computations of a GEMM operation, and can offload accumulations to at least one target DPU, allowing fetching, computation, and accumulation to be performed concurrently and efficiently.

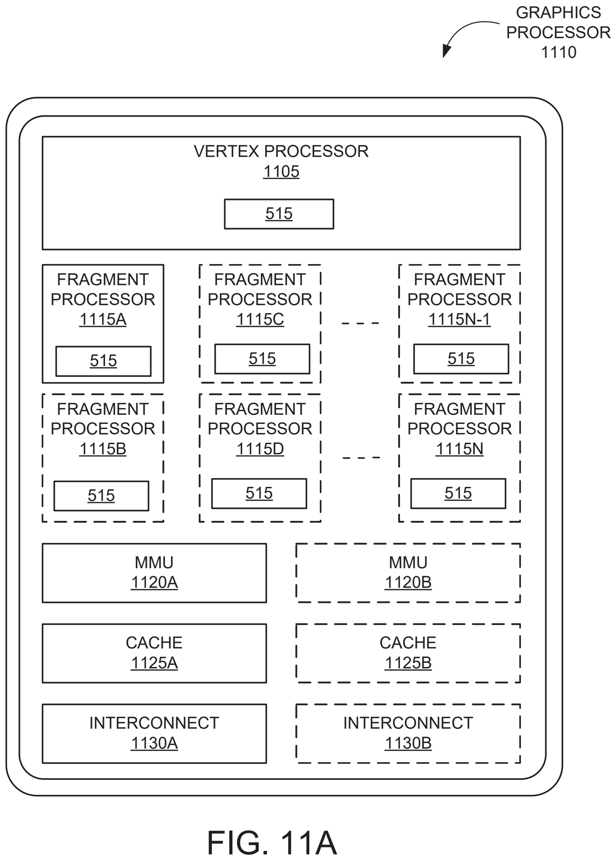

FIGS. 11A-11B illustrate exemplary integrated circuits and associated graphics processors that may be fabricated using one or more IP cores, according to various embodiments described herein. In addition to what is illustrated, other logic and circuits may be included in at least one embodiment, including additional graphics processors/cores, peripheral interface controllers, or general-purpose processor cores.

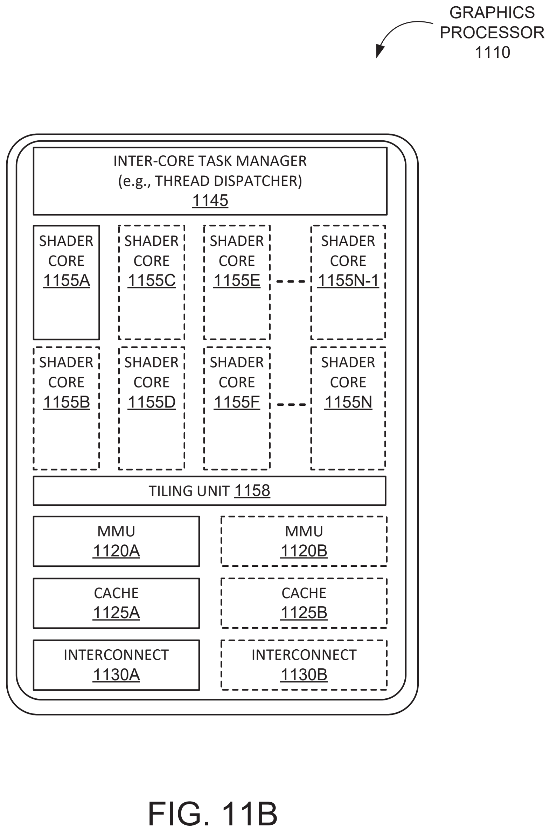

FIGS. 11A-11B are block diagrams illustrating exemplary graphics processors for use within an SoC, according to embodiments described herein. FIG. 11A illustrates an exemplary graphics processor 1110 of a system on a chip integrated circuit that may be fabricated using one or more IP cores, according to at least one embodiment. FIG. 11B illustrates an additional exemplary graphics processor 1140 of a system on a chip integrated circuit that may be fabricated using one or more IP cores, according to at least one embodiment. In at least one embodiment, graphics processor 1110 of FIG. 11A is a low power graphics processor core. In at least one embodiment, graphics processor 1140 of FIG. 11B is a higher performance graphics processor core. In at least one embodiment, each of graphics processors 1110, 1140 can be variants of computer system 900 of FIG. 9.

In at least one embodiment, graphics processor 1110 includes a vertex processor 1105 and one or more fragment processor(s) 1115A-1115N (e.g., 1115A, 1115B, 1115C, 1115D, through 1115N-1, and 1115N). In at least one embodiment, graphics processor 1110 can execute different shader programs via separate logic, such that vertex processor 1105 is optimized to execute operations for vertex shader programs, while one or more fragment processor(s) 1115A-1115N execute fragment (e.g., pixel) shading operations for fragment or pixel shader programs. In at least one embodiment, vertex processor 1105 performs a vertex processing stage of a 3D graphics pipeline and generates primitives and vertex data. In at least one embodiment, fragment processor(s) 1115A-1115N use primitive and vertex data generated by vertex processor 1105 to produce a framebuffer that is displayed on a display device. In at least one embodiment, fragment processor(s) 1115A-1115N are optimized to execute fragment shader programs as provided for in an OpenGL API, which may be used to perform similar operations as a pixel shader program as provided for in a Direct 3D API.

In at least one embodiment, graphics processor 1110 additionally includes one or more memory management units (MMUs) 1120A-1120B, cache(s) 1125A-1125B, and circuit interconnect(s) 1130A-1130B. In at least one embodiment, one or more MMU(s) 1120A-1120B provide for virtual to physical address mapping for graphics processor 1110, including for vertex processor 1105 and/or fragment processor(s) 1115A-1115N, which may reference vertex or image/texture data stored in memory, in addition to vertex or image/texture data stored in one or more cache(s) 1125A-1125B. In at least one embodiment, one or more MMU(s) 1120A-1120B may be synchronized with other MMUs within a system, including one or more MMUs associated with one or more application processor(s) 1105, image processors 1115, and/or video processors 1120 of FIG. 11A, such that each processor 1105-1120 can participate in a shared or unified virtual memory system. In at least one embodiment, one or more circuit interconnect(s) 1130A-1130B enable graphics processor 1110 to interface with other IP cores within SoC, either via an internal bus of SoC or via a direct connection.

In at least one embodiment, graphics processor 1140 includes one or more shader core(s) 1155A-1155N (e.g., 1155A, 1155B, 1155C, 1155D, 1155E, 1155F, through 1155N-1, and 1155N) as shown in FIG. 11B, which provides for a unified shader core architecture in which a single core or type or core can execute all types of programmable shader code, including shader program code to implement vertex shaders, fragment shaders, and/or compute shaders. In at least one embodiment, a number of shader cores can vary. In at least one embodiment, graphics processor 1140 includes an inter-core task manager 1145, which acts as a thread dispatcher to dispatch execution threads to one or more shader cores 1155A-1155N and a tiling unit 1158 to accelerate tiling operations for tile-based rendering, in which rendering operations for a scene are subdivided in image space, for example to exploit local spatial coherence within a scene or to optimize use of internal caches.

Embodiments presented herein can prefetch data for individual block computations of a GEMM operation, and can offload accumulations to at least one target DPU, allowing fetching, computation, and accumulation to be performed concurrently and efficiently.

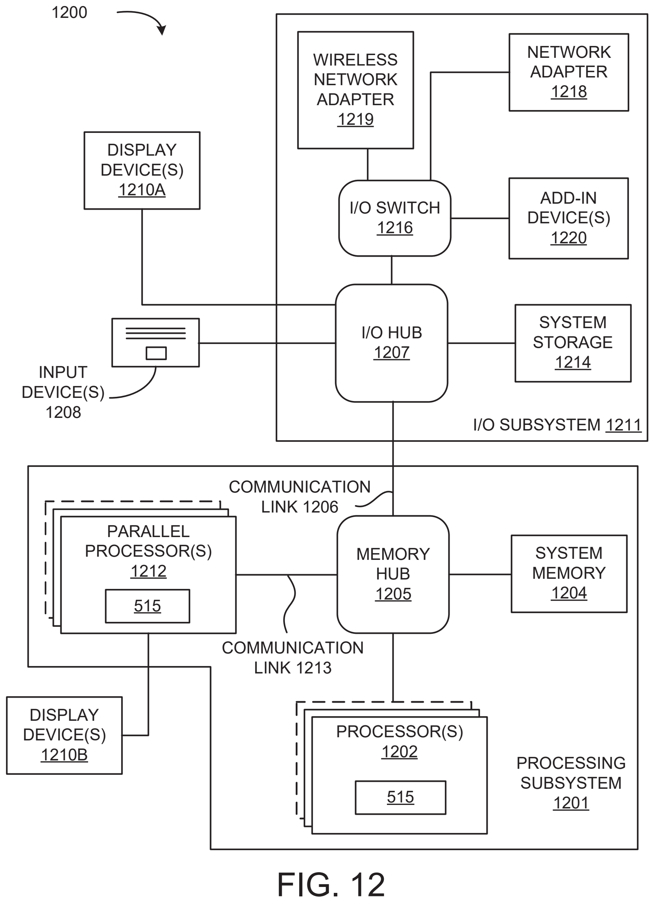

FIG. 12 is a block diagram illustrating a computing system 1200 according to at least one embodiment. In at least one embodiment, computing system 1200 includes a processing subsystem 1201 having one or more processor(s) 1202 and a system memory 1204 communicating via an interconnection path that may include a memory hub 1205. In at least one embodiment, memory hub 1205 may be a separate component within a chipset component or may be integrated within one or more processor(s) 1202. In at least one embodiment, memory hub 1205 couples with an I/O subsystem 1211 via a communication link 1206. In at least one embodiment, I/O subsystem 1211 includes an I/O hub 1207 that can enable computing system 1200 to receive input from one or more input device(s) 1208. In at least one embodiment, I/O hub 1207 can enable a display controller, which may be included in one or more processor(s) 1202, to provide outputs to one or more display device(s) 1210A. In at least one embodiment, one or more display device(s) 1210A coupled with I/O hub 1207 can include a local, internal, or embedded display device.

In at least one embodiment, processing subsystem 1201 includes one or more parallel processor(s) 1212 coupled to memory hub 1205 via a bus or other communication link 1213. In at least one embodiment, communication link 1213 may use one of any number of standards based communication link technologies or protocols, such as but not limited to PCI Express, or may be a vendor-specific communications interface or communications fabric. In at least one embodiment, one or more parallel processor(s) 1212 form a computationally focused parallel or vector processing system that can include a large number of processing cores and/or processing clusters, such as a many-integrated core (MIC) processor. In at least one embodiment, some or all of parallel processor(s) 1212 form a graphics processing subsystem that can output pixels to one of one or more display device(s) 1210A coupled via I/O hub 1207. In at least one embodiment, parallel processor(s) 1212 can also include a display controller and display interface (not shown) to enable a direct connection to one or more display device(s) 1210B. In at least one embodiment, parallel processor(s) 1212 include one or more cores, such as graphics cores 1200 discussed herein.

In at least one embodiment, a system storage unit 1214 can connect to I/O hub 1207 to provide a storage mechanism for computing system 1200. In at least one embodiment, an I/O switch 1216 can be used to provide an interface mechanism to enable connections between I/O hub 1207 and other components, such as a network adapter 1218 and/or a wireless network adapter 1219 that may be integrated into platform, and various other devices that can be added via one or more add-in device(s) 1220. In at least one embodiment, network adapter 1218 can be an Ethernet adapter or another wired network adapter. In at least one embodiment, wireless network adapter 1219 can include one or more of a Wi-Fi, Bluetooth, near field communication (NFC), or other network device that includes one or more wireless radios.

In at least one embodiment, computing system 1200 can include other components not explicitly shown, including USB or other port connections, optical storage drives, video capture devices, and like, may also be connected to I/O hub 1207. In at least one embodiment, communication paths interconnecting various components in FIG. 12 may be implemented using any suitable protocols, such as PCI (Peripheral Component Interconnect) based protocols (e.g., PCI-Express), or other bus or point-to-point communication interfaces and/or protocol(s), such as NV-Link high-speed interconnect, or interconnect protocols.

In at least one embodiment, parallel processor(s) 1212 incorporate circuitry optimized for graphics and video processing, including, for example, video output circuitry, and constitutes a graphics processing unit (GPU), e.g., parallel processor(s) 1212 includes graphics core 1200. In at least one embodiment, parallel processor(s) 1212 incorporate circuitry optimized for general purpose processing. In at least embodiment, components of computing system 1200 may be integrated with one or more other system elements on a single integrated circuit. For example, in at least one embodiment, parallel processor(s) 1212, memory hub 1205, processor(s) 1202, and I/O hub 1207 can be integrated into a system on chip (SoC) integrated circuit. In at least one embodiment, components of computing system 1200 can be integrated into a single package to form a system in package (SIP) configuration. In at least one embodiment, at least a portion of components of computing system 1200 can be integrated into a multi-chip module (MCM), which can be interconnected with other multi-chip modules into a modular computing system.

Inference and/or training logic 515 are used to perform inferencing and/or training operations associated with one or more embodiments. In at least one embodiment, inference and/or training logic 515 may be used in system FIG. 12 for inferencing or predicting operations based, at least in part, on weight parameters calculated using neural network training operations, neural network functions and/or architectures, or neural network use cases described herein.

Embodiments presented herein can prefetch data for individual block computations of a GEMM operation, and can offload accumulations to at least one target DPU, allowing fetching, computation, and accumulation to be performed concurrently and efficiently.

## PROCESSORS

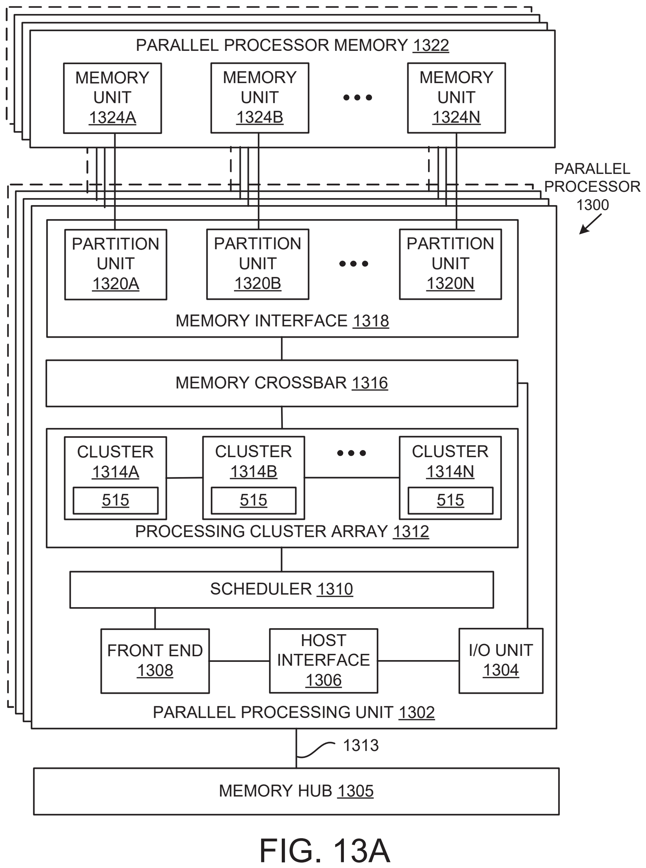

FIG. 13A illustrates a parallel processor 1300 according to at least one embodiment. In at least one embodiment, various components of parallel processor 1300 may be implemented using one or more integrated circuit devices, such as programmable processors, application specific integrated circuits (ASICs), or field programmable gate arrays (FPGA). In at least one embodiment, illustrated parallel processor 1300 is a variant of one or more parallel processor(s) 1212 shown in FIG. 12 according to an exemplary embodiment. In at least one embodiment, a parallel processor 1300 includes one or more graphics cores 1200.

In at least one embodiment, parallel processor 1300 includes a parallel processing unit 1302. In at least one embodiment, parallel processing unit 1302 includes an I/O unit 1304 that enables communication with other devices, including other instances of parallel processing unit 1302. In at least one embodiment, I/O unit 1304 may be directly connected to other devices. In at least one embodiment, I/O unit 1304 connects with other devices via use of a hub or switch interface, such as a memory hub 1305. In at least one embodiment, connections between memory hub 1305 and I/O unit 1304 form a communication link 1313. In at least one embodiment, I/O unit 1304 connects with a host interface 1306 and a memory crossbar 1316, where host interface 1306 receives commands directed to performing processing operations and memory crossbar 1316 receives commands directed to performing memory operations.

In at least one embodiment, when host interface 1306 receives a command buffer via I/O unit 1304, host interface 1306 can direct work operations to perform those commands to a front end 1308. In at least one embodiment, front end 1308 couples with a scheduler 1310 (which may be referred to as a sequencer), which is configured to distribute commands or other work items to a processing cluster array 1312. In at least one embodiment, scheduler 1310 ensures that processing cluster array 1312 is properly configured and in a valid state before tasks are distributed to a cluster of processing cluster array 1312. In at least one embodiment, scheduler 1310 is implemented via firmware logic executing on a microcontroller. In at least one embodiment, microcontroller implemented scheduler 1310 is configurable to perform complex scheduling and work distribution operations at coarse and fine granularity, enabling rapid preemption and context switching of threads executing on processing array 1312. In at least one embodiment, host software can prove workloads for scheduling on processing cluster array 1312 via one of multiple graphics processing paths. In at least one embodiment, workloads can then be automatically distributed across processing array cluster 1312 by scheduler 1310 logic within a microcontroller including scheduler 1310.

In at least one embodiment, processing cluster array 1312 can include up to "N" processing clusters (e.g., cluster 1314A, cluster 1314B, through cluster 1314N), where "N" represents a positive integer (which may be a different integer "N" than used in other figures). In at least one embodiment, each cluster 1314A-1314N of processing cluster array 1312 can execute a large number of concurrent threads. In at least one embodiment, scheduler 1310 can allocate work to clusters 1314A-1314N of processing cluster array 1312 using various scheduling and/or work distribution algorithms, which may vary depending on workload arising for each type of program or computation. In at least one embodiment, scheduling can be handled dynamically by scheduler 1310, or can be assisted in part by compiler logic during compilation of program logic configured for execution by processing cluster array 1312. In at least one embodiment, different clusters 1314A-1314N of processing cluster array 1312 can be allocated for processing different types of programs or for performing different types of computations.

In at least one embodiment, processing cluster array 1312 can be configured to perform various types of parallel processing operations. In at least one embodiment, processing cluster array 1312 is configured to perform general-purpose parallel compute operations. For example, in at least one embodiment, processing cluster array 1312 can include logic to execute processing tasks including filtering of video and/or audio data, performing modeling operations, including physics operations, and performing data transformations.

In at least one embodiment, processing cluster array 1312 is configured to perform parallel graphics processing operations. In at least one embodiment, processing cluster array 1312 can include additional logic to support execution of such graphics processing operations, including but not limited to, texture sampling logic to perform texture operations, as well as tessellation logic and other vertex processing logic. In at least one embodiment, processing cluster array 1312 can be configured to execute graphics processing related shader programs such as but not limited to, vertex shaders, tessellation shaders, geometry shaders, and pixel shaders. In at least one embodiment, parallel processing unit 1302 can transfer data from system memory via I/O unit 1304 for processing. In at least one embodiment, during processing, transferred data can be stored to on-chip memory (e.g., parallel processor memory 1322) during processing, then written back to system memory.

In at least one embodiment, when parallel processing unit 1302 is used to perform graphics processing, scheduler 1310 can be configured to divide a processing workload into approximately equal sized tasks, to better enable distribution of graphics processing operations to multiple clusters 1314A-1314N of processing cluster array 1312. In at least one embodiment, portions of processing cluster array 1312 can be configured to perform different types of processing. For example, in at least one embodiment, a first portion may be configured to perform vertex shading and topology generation, a second portion may be configured to perform tessellation and geometry shading, and a third portion may be configured to perform pixel shading or other screen space operations, to produce a rendered image for display. In at least one embodiment, intermediate data produced by one or more of clusters 1314A-1314N may be stored in buffers to allow intermediate data to be transmitted between clusters 1314A-1314N for further processing.

In at least one embodiment, processing cluster array 1312 can receive processing tasks to be executed via scheduler 1310, which receives commands defining processing tasks from front end 1308. In at least one embodiment, processing tasks can include indices of data to be processed, e.g., surface (patch) data, primitive data, vertex data, and/or pixel data, as well as state parameters and commands defining how data is to be processed (e.g., what program is to be executed). In at least one embodiment, scheduler 1310 may be configured to fetch indices corresponding to tasks or may receive indices from front end 1308. In at least one embodiment, front end 1308 can be configured to ensure processing cluster array 1312 is configured to a valid state before a workload specified by incoming command buffers (e.g., batch-buffers, push buffers, etc.) is initiated.

In at least one embodiment, each of one or more instances of parallel processing unit 1302 can couple with a parallel processor memory 1322. In at least one embodiment, parallel processor memory 1322 can be accessed via memory crossbar 1316, which can receive memory requests from processing cluster array 1312 as well as I/O unit 1304. In at least one embodiment, memory crossbar 1316 can access parallel processor memory 1322 via a memory interface 1318. In at least one embodiment, memory interface 1318 can include multiple partition units (e.g., partition unit 1320A, partition unit 1320B, through partition unit 1320N) that can each couple to a portion (e.g., memory unit) of parallel processor memory 1322. In at least one embodiment, a number of partition units 1320A-1320N is configured to be equal to a number of memory units, such that a first partition unit 1320A has a corresponding first memory unit 1324A, a second partition unit 1320B has a corresponding memory unit 1324B, and an N-th partition unit 1320N has a corresponding N-th memory unit 1324N. In at least one embodiment, a number of partition units 1320A-1320N may not be equal to a number of memory units.

In at least one embodiment, memory units 1324A-1324N can include various types of memory devices, including dynamic random access memory (DRAM) or graphics random access memory, such as synchronous graphics random access memory (SGRAM), including graphics double data rate (GDDR) memory. In at least one embodiment, memory units 1324A-1324N may also include 3D stacked memory, including but not limited to high bandwidth memory (HBM), HBM2e, or HDM3. In at least one embodiment, render targets, such as frame buffers or texture maps may be stored across memory units 1324A-1324N, allowing partition units 1320A-1320N to write portions of each render target in parallel to efficiently use available bandwidth of parallel processor memory 1322. In at least one embodiment, a local instance of parallel processor memory 1322 may be excluded in favor of a unified memory design that utilizes system memory in conjunction with local cache memory.

In at least one embodiment, any one of clusters 1314A-1314N of processing cluster array 1312 can process data that will be written to any of memory units 1324A-1324N within parallel processor memory 1322. In at least one embodiment, memory crossbar 1316 can be configured to transfer an output of each cluster 1314A-1314N to any partition unit 1320A-1320N or to another cluster 1314A-1314N, which can perform additional processing operations on an output. In at least one embodiment, each cluster 1314A-1314N can communicate with memory interface 1318 through memory crossbar 1316 to read from or write to various external memory devices. In at least one embodiment, memory crossbar 1316 has a connection to memory interface 1318 to communicate with I/O unit 1304, as well as a connection to a local instance of parallel processor memory 1322, enabling processing units within different processing clusters 1314A-1314N to communicate with system memory or other memory that is not local to parallel processing unit 1302. In at least one embodiment, memory crossbar 1316 can use virtual channels to separate traffic streams between clusters 1314A-1314N and partition units 1320A-1320N.

In at least one embodiment, multiple instances of parallel processing unit 1302 can be provided on a single add-in card, or multiple add-in cards can be interconnected. In at least one embodiment, different instances of parallel processing unit 1302 can be configured to interoperate even if different instances have different numbers of processing cores, different amounts of local parallel processor memory, and/or other configuration differences. For example, in at least one embodiment, some instances of parallel processing unit 1302 can include higher precision floating point units relative to other instances. In at least one embodiment, systems incorporating one or more instances of parallel processing unit 1302 or parallel processor 1300 can be implemented in a variety of configurations and form factors, including but not limited to desktop, laptop, or handheld personal computers, servers, workstations, game consoles, and/or embedded systems.

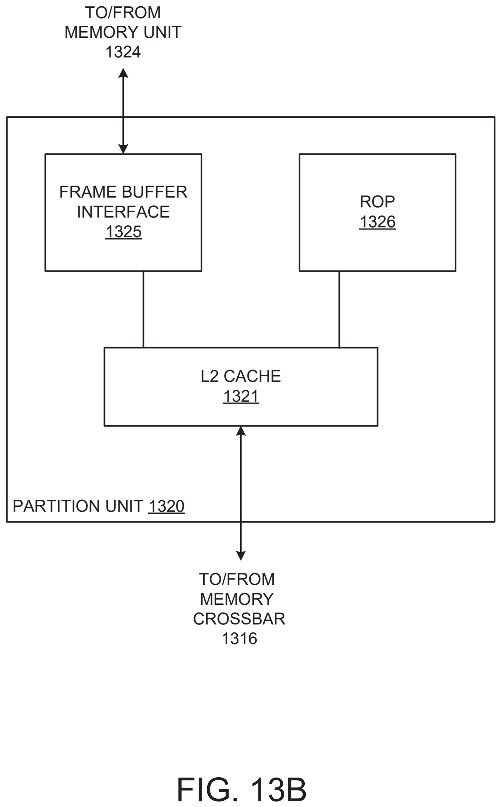

FIG. 13B is a block diagram of a partition unit 1320 according to at least one embodiment. In at least one embodiment, partition unit 1320 is an instance of one of partition units 1320A-1320N of FIG. 13A. In at least one embodiment, partition unit 1320 includes an L2 cache 1321, a frame buffer interface 1325, and a ROP 1326 (raster operations unit). In at least one embodiment, L2 cache 1321 is a read/write cache that is configured to perform load and store operations received from memory crossbar 1316 and ROP 1326. In at least one embodiment, read misses and urgent write-back requests are output by L2 cache 1321 to frame buffer interface 1325 for processing. In at least one embodiment, updates can also be sent to a frame buffer via frame buffer interface 1325 for processing. In at least one embodiment, frame buffer interface 1325 interfaces with one of memory units in parallel processor memory, such as memory units 1324A-1324N of FIG. 13A (e.g., within parallel processor memory 1322).

In at least one embodiment, ROP 1326 is a processing unit that performs raster operations such as stencil, z test, blending, etc. In at least one embodiment, ROP 1326 then outputs processed graphics data that is stored in graphics memory. In at least one embodiment, ROP 1326 includes compression logic to compress depth or color data that is written to memory and decompress depth or color data that is read from memory. In at least one embodiment, compression logic can be lossless compression logic that makes use of one or more of multiple compression algorithms. In at least one embodiment, a type of compression that is performed by ROP 1326 can vary based on statistical characteristics of data to be compressed. For example, in at least one embodiment, delta color compression is performed on depth and color data on a per-tile basis.

In at least one embodiment, ROP 1326 is included within each processing cluster (e.g., cluster 1314A-1314N of FIG. 13A) instead of within partition unit 1320. In at least one embodiment, read and write requests for pixel data are transmitted over memory crossbar 1316 instead of pixel fragment data. In at least one embodiment, processed graphics data may be displayed on a display device, such as one of one or more display device(s) 1510 of FIG. 15, routed for further processing by processor(s) 1302, or routed for further processing by one of processing entities within parallel processor 1300 of FIG. 13A.

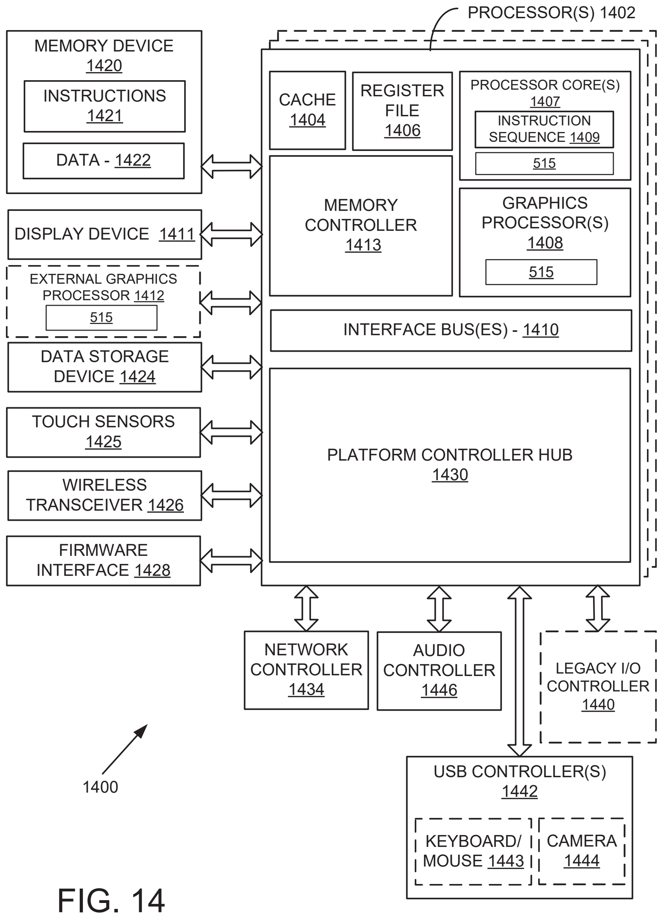

FIG. 14 is a block diagram of a processing system, according to at least one embodiment. In at least one embodiment, system 1400 includes one or more processor(s) 1402 and one or more graphics processor(s) 1408, and may be a single processor desktop system, a multiprocessor workstation system, or a server system having a large number of processor(s) 1402 or processor core(s) 1407. In at least one embodiment, system 1400 is a processing platform incorporated within a system-on-a-chip (SoC) integrated circuit for use in mobile, handheld, or embedded devices. In at least one embodiment, one or more graphics processor(s) 1408 include one or more graphics cores 1200.

In at least one embodiment, system 1400 can include, or be incorporated within a server-based gaming platform, a game console, including a game and media console, a mobile gaming console, a handheld game console, or an online game console. In at least one embodiment, system 1400 is a mobile phone, a smart phone, a tablet computing device or a mobile Internet device. In at least one embodiment, processing system 1400 can also include, couple with, or be integrated within a wearable device, such as a smart watch wearable device, a smart eyewear device, an augmented reality device, or a virtual reality device. In at least one embodiment, processing system 1400 is a television or set top box device having one or more processor(s) 1402 and a graphical interface generated by one or more graphics processor(s) 1408.

In at least one embodiment, one or more processor(s) 1402 each include one or more processor core(s) 1407 to process instructions which, when executed, perform operations for system and user software. In at least one embodiment, each of one or more processor core(s) 1407 is configured to process a specific instruction sequence 1409. In at least one embodiment, instruction sequence 1409 may facilitate Complex Instruction Set Computing (CISC), Reduced Instruction Set Computing (RISC), or computing via a Very Long Instruction Word (VLIW). In at least one embodiment, processor core(s) 1407 may each process a different instruction sequence 1409, which may include instructions to facilitate emulation of other instruction sequences. In at least one embodiment, processor core(s) 1407 may also include other processing devices, such a Digital Signal Processor (DSP).

In at least one embodiment, processor(s) 1402 includes a cache memory 1404. In at least one embodiment, processor(s) 1402 can have a single internal cache or multiple levels of internal cache. In at least one embodiment, cache memory is shared among various components of processor(s) 1402. In at least one embodiment, processor(s) 1402 also uses an external cache (e.g., a Level-3 (L3) cache or Last Level Cache (LLC)) (not shown), which may be shared among processor core(s) 1407 using known cache coherency techniques. In at least one embodiment, a register file 1406 is additionally included in processor(s) 1402, which may include different types of registers for storing different types of data (e.g., integer registers, floating point registers, status registers, and an instruction pointer register). In at least one embodiment, register file 1406 may include general-purpose registers or other registers.

In at least one embodiment, one or more processor(s) 1402 are coupled with one or more interface bus(es) 1410 to transmit communication signals such as address, data, or control signals between processor(s) 1402 and other components in system 1400. In at least one embodiment, interface bus(es) 1410 can be a processor bus, such as a version of a Direct Media Interface (DMI) bus. In at least one embodiment, interface bus(es) 1410 is not limited to a DMI bus, and may include one or more Peripheral Component Interconnect buses (e.g., PCI, PCI Express), memory busses, or other types of interface busses. In at least one embodiment processor(s) 1402 include an integrated memory controller 1416 and a platform controller hub 1430. In at least one embodiment, memory controller 1416 facilitates communication between a memory device and other components of system 1400, while platform controller hub (PCH) 1430 provides connections to I/O devices via a local I/O bus.

In at least one embodiment, a memory device 1420 can be a dynamic random access memory (DRAM) device, a static random access memory (SRAM) device, flash memory device, phase-change memory device, or some other memory device having suitable performance to serve as process memory. In at least one embodiment, memory device 1420 can operate as system memory for system 1400, to store data 1422 and instructions 1421 for use when one or more processor(s) 1402 executes an application or process. In at least one embodiment, memory controller 1416 also couples with an optional external graphics processor 1412, which may communicate with one or more graphics processor(s) 1408 in processor(s) 1402 to perform graphics and media operations. In at least one embodiment, a display device 1411 can connect to processor(s) 1402. In at least one embodiment, display device 1411 can include one or more of an internal display device, as in a mobile electronic device or a laptop device, or an external display device attached via a display interface (e.g., DisplayPort, etc.). In at least one embodiment, display device 1411 can include a head mounted display (HMD) such as a stereoscopic display device for use in virtual reality (VR) applications or augmented reality (AR) applications.

In at least one embodiment, platform controller hub 1430 enables peripherals to connect to memory device 1420 and processor(s) 1402 via a high-speed I/O bus. In at least one embodiment, I/O peripherals include, but are not limited to, an audio controller 1446, a network controller 1434, a firmware interface 1428, a wireless transceiver 1426, touch sensors 1425, a data storage device 1424 (e.g., hard disk drive, flash memory, etc.). In at least one embodiment, data storage device 1424 can connect via a storage interface (e.g., SATA) or via a peripheral bus, such as a Peripheral Component Interconnect bus (e.g., PCI, PCI Express). In at least one embodiment, touch sensors 1425 can include touch screen sensors, pressure sensors, or fingerprint sensors. In at least one embodiment, wireless transceiver 1426 can be a Wi-Fi transceiver, a Bluetooth transceiver, or a mobile network transceiver such as a 3G, 4G, or Long Term Evolution (LTE) transceiver. In at least one embodiment, firmware interface 1428 enables communication with system firmware, and can be, for example, a unified extensible firmware interface (UEFI). In at least one embodiment, network controller 1434 can enable a network connection to a wired network. In at least one embodiment, a high-performance network controller (not shown) couples with interface bus(es) 1410. In at least one embodiment, audio controller 1446 is a multi-channel high definition audio controller. In at least one embodiment, system 1400 includes an optional legacy I/O controller 1440 for coupling legacy (e.g., Personal System 2 (PS/2)) devices to system 1400. In at least one embodiment, platform controller hub 1430 can also connect to one or more Universal Serial Bus (USB) controller(s) 1442 connect input devices, such as keyboard and mouse 1443 combinations, a camera 1444, or other USB input devices.

In at least one embodiment, an instance of memory controller 1416 and platform controller hub 1430 may be integrated into a discreet external graphics processor, such as external graphics processor 1412. In at least one embodiment, platform controller hub 1430 and/or memory controller 1416 may be external to one or more processor(s) 1402. For example, in at least one embodiment, system 1400 can include an external memory controller 1416 and platform controller hub 1430, which may be configured as a memory controller hub and peripheral controller hub within a system chipset that is in communication with processor(s) 1402.

Embodiments presented herein can prefetch data for individual block computations of a GEMM operation, and can offload accumulations to at least one target DPU, allowing fetching, computation, and accumulation to be performed concurrently and efficiently.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:

Clause 1. A processor, comprising:
one or more logical units to:

prefetch, for a matrix multiplication operation to be performed, first data to be used for a first computation for an identified block of a result matrix;
perform the first computation while prefetching second data to be used for a second computation for the identified block of the result matrix;
perform the second computation while prefetching third data to be used for a third computation for the identified block of the result matrix;
perform, using a result of the first computation, an accumulate operation for the identified block during performance of the second computation; and
continue to perform, concurrently and in parallel, corresponding prefetch, matrix computation, and accumulate operations for the identified block and other blocks of the result matrix until the matrix multiplication operation is completed.

Clause 2. The processor of clause 1, wherein the accumulate operation is performed using at least one offload processor, a central processing unit (CPU), or a graphics processing unit (GPU).

Clause 3. The processor of clause 1, wherein the matrix multiplication operation is conducted over blocks of at least a first matrix and a second matrix, and wherein a number of computations to be performed for a corresponding block of the result matrix depends in part on a dimensionality of the first matrix and the second matrix.

Clause 4. The processor of clause 1, wherein at least the first, second, and third computations for the identified block of the result matrix are performed in parallel.

Clause 5. The processor of clause 1, wherein the one or more logical units are further to use one or more local buffers to store results of the computations to be used in the accumulate operation.

Clause 6. The processor of clause 1, wherein the one or more processors are further to flush stored data after the corresponding prefetch, computation, and accumulate operations.

Clause 7. The processor of clause 1, wherein the computations comprise local block-wise matrix computations, and where the prefetch and accumulate operations are non-blocking.

Clause 8. The processor of clause 1, wherein prefetching is performed to obtain instances of data before a respective computation is to be performed using retrieved data.

Clause 9. The processor of clause 1, wherein the computations for individual blocks of data are distributed evenly across a set of processing units.

Clause 10. A computer-implemented method, comprising:

prefetching instances of data for block multiplication computations, to be performed on blocks of at least a first matrix and a second matrix, before a time of performance of the block multiplication computations;
performing the block multiplication computations using the prefetched instances of data and one or more processing units;
performing, concurrent and in parallel with the prefetching and the performing of the block multiplication computations, accumulate operations using results of the block multiplication computations and at least one offload processing unit; and
continuing to perform, concurrently and in parallel, corresponding prefetching, performing of the block multiplication computations, and performing of the accumulate operations for a current block and remaining blocks of a result matrix until a matrix multiplication operation has completed.

Clause 11. The computer-implemented method of clause 10, wherein the at least one offload processing unit includes at least one data processing unit (DPU).

Clause 12. The computer-implemented method of clause 10, wherein the performing of the block multiplication computations for individual blocks of data is distributed evenly or unevenly across the one or more processing units.

Clause 13. The computer-implemented method of clause 10, further comprising:
using one or more local buffers to store results of the block multiplication computations to be used in the accumulate operations.

Clause 14. The computer-implemented method of clause 10, wherein the block multiplication computations comprise local block-wise matrix computations, and where the prefetch and accumulate operations are non-blocking.

Clause 15. The computer-implemented method of clause 10, wherein the block multiplication computations are performed for individual blocks of a first matrix and a second matrix to be multiplied as part of a general matrix multiplication (GEMM) operation.

Clause 16. A system comprising one or more processing units to perform a matrix multiplication operation by, at least partially concurrently and in parallel, prefetching data to be used for individual matrix block computations, performing the individual matrix computations using one or more target processing units, and performing accumulate operations using results of the individual matrix computations with at least one offload processing unit.

Clause 17. The system of clause 16, wherein the at least one offload processing unit includes at least one data processing unit (DPU).

Clause 18. The system of clause 16, wherein the performing of the individual matrix computations for individual blocks of data is distributed evenly across the one or more target processing units.

Clause 19. The system of clause 16, wherein the one or more processing units are further to use one or more local buffers to store results of the individual matrix computations to be used in the accumulate operations, and wherein the individual matrix computations are performed for individual blocks of a first matrix and a second matrix to be multiplied as part of a general matrix multiplication (GEMM) operation.

Clause 20. The system of clause 16, wherein the system is at least one of:

a system for performing simulation operations;
a system for performing simulation operations to test or validate autonomous machine applications;
a system for performing digital twin operations;
a system for performing light transport simulation;
a system for rendering graphical output;
a system for performing deep learning operations;
a system for performing generative AI operations using a large language model (LLM);
a system implemented using an edge device;
a system for generating or presenting virtual reality (VR) content;

a system for generating or presenting augmented reality (AR) content;

a system for generating or presenting mixed reality (MR) content;

a system incorporating one or more Virtual Machines (VMs);

a system implemented at least partially in a data center;

a system for performing hardware testing using simulation;

a system for performing generative operations using a language model (LM);

a system for synthetic data generation;

a collaborative content creation platform for 3D assets; or

a system implemented at least partially using cloud computing resources.

**Claims**

1. A processor, comprising:
   one or more logical units to:

   prefetch, for a matrix multiplication operation to be performed, first data to be used for a first computation for an identified block of a result matrix;

   perform the first computation while prefetching second data to be used for a second computation for the identified block of the result matrix;

   perform the second computation while prefetching third data to be used for a third computation for the identified block of the result matrix;

   perform, using a result of the first computation, an accumulate operation for the identified block during performance of the second computation; and

   continue to perform, concurrently and in parallel, corresponding prefetch, matrix computation, and accumulate operations for the identified block and other blocks of the result matrix until the matrix multiplication operation is completed.

2. The processor of claim 1, wherein the accumulate operation is performed using at least one offload processor, a central processing unit (CPU), or a graphics processing unit (GPU).

3. The processor of claim 1 or 2, wherein the matrix multiplication operation is conducted over blocks of at least a first matrix and a second matrix, and wherein a number of computations to be performed for a corresponding block of the result matrix depends in part on a dimensionality of the first matrix and the second matrix.

4. The processor of claim 1, 2, or 3, wherein at least the first, second, and third computations for the identified block of the result matrix are performed in parallel.

5. The processor of any preceding claim, wherein the one or more logical units are further to use one or more local buffers to store results of the computations to be used in the accumulate operation.

6. The processor of any preceding claim, wherein the one or more processors are further to flush stored data after the corresponding prefetch, computation, and accumulate operations.

7. The processor of any preceding claim, wherein the computations comprise local block-wise matrix computations, and where the prefetch and accumulate operations are non-blocking.

8. The processor of any preceding claim, wherein prefetching is performed to obtain instances of data before a respective computation is to be performed using retrieved data.

9. The processor of any preceding claim, wherein the computations for individual blocks of data are distributed evenly across a set of processing units.

10. A computer-implemented method, comprising:

    prefetching instances of data for block multiplication computations, to be performed on blocks of at least a first matrix and a second matrix, before a time of performance of the block multiplication computations;

    performing the block multiplication computations using the prefetched instances of data and one or more processing units;

    performing, concurrent and in parallel with the prefetching and the performing of the block multiplication computations, accumulate operations using results of the block multiplication computations and at least one offload processing unit; and

    continuing to perform, concurrently and in parallel, corresponding prefetching, performing of the block multiplication computations, and performing of the accumulate operations for a current block and remaining blocks of a result matrix until a matrix multiplication operation has completed.

11. The computer-implemented method of claim 10, wherein the performing of the block multiplication computations for individual blocks of data is distributed evenly or unevenly across the one or more processing units.

12. The computer-implemented method of claim 10 or 11, further comprising:
using one or more local buffers to store results of the block multiplication computations to be used in the accumulate operations.

13. The computer-implemented method of claim 10, 11, or 12, wherein the block multiplication computations are performed for individual blocks of a first matrix and a second matrix to be multiplied as part of a general matrix multiplication (GEMM) operation.

14. A system comprising one or more processing units to perform a matrix multiplication operation by, at least partially concurrently and in parallel, prefetching data to be used for individual matrix block computations, performing the individual matrix computations using one or more target processing units, and performing accumulate operations using results of the individual matrix computations with at least one offload processing unit.

15. The system of claim 14, wherein the system is at least one of:

> a system for performing simulation operations;
> a system for performing simulation operations to test or validate autonomous machine applications;
> a system for performing digital twin operations;
> a system for performing light transport simulation;
> a system for rendering graphical output;
> a system for performing deep learning operations;
> a system for performing generative AI operations using a large language model (LLM);
> a system implemented using an edge device;
> a system for generating or presenting virtual reality (VR) content;
> a system for generating or presenting augmented reality (AR) content;
> a system for generating or presenting mixed reality (MR) content;
> a system incorporating one or more Virtual Machines (VMs);
> a system implemented at least partially in a data center;
> a system for performing hardware testing using simulation;
> a system for performing generative operations using a language model (LM);
> a system for synthetic data generation;
> a collaborative content creation platform for 3D assets; or
> a system implemented at least partially using cloud computing resources.

FIG. 1

FIG. 2

FIG. 3A

FIG. 3B

400

402 — Receive a request to perform a general matrix multiplication operation

404 — Divide the matrices for the operation into blocks of a determined dimension

406 — Allocate, for a current block of an output matrix for the operation, one or more workers

408 — Prefetch, by a given worker, data to be used for a current computation to be performed for the current block

411

410 — Perform the current computation for the block

Prefetch data for subsequent computation(s)

Perform, if there is a result of a prior computation, an accumulation using at least one DPU concurrent with performing the current computation — 412

414 — More performing?    Yes

No

416 — Write the accumulated result to the corresponding block of the output matrix

418 — More blocks?    Yes

No

420 — Provide resulting output matrix in response to received request

FIG. 4

DATA CENTER
500

APPLICATION LAYER 540

APPLICATION(S) 542

SOFTWARE LAYER 530

SOFTWARE 532

FRAMEWORK LAYER 520

| JOB SCHEDULER 522 | CONFIGURATION MANAGER 524 |

DISTRIBUTED FILE SYSTEM 528

RESOURCE MANAGER 526

DATA CENTER INFRASTRUCTURE LAYER 510

RESOURCE ORCHESTRATOR 512

GROUPED COMPUTING RESOURCES 514
515

NODE C.R. 516(1)
515

NODE C.R. 516(2)
515

● ● ●

NODE C.R. 516(N)
515

FIG. 5

FIG. 6

FIG. 7

FIG. 8

COMPUTER
SYSTEM
900

USB STICK 920

PROCESSING
UNIT
930

515

USB
INTERFACE
LOGIC 950

USB
INTERFACE
940

COMPUTER
910

FIG. 9

SOC INTEGRATED
CIRCUIT
1000

APPLICATION
PROCESSOR(S)
1005

515

GRAPHICS
PROCESSOR
1010

515

IMAGE
PROCESSOR
1015

515

VIDEO
PROCESSOR
1020

515

USB
1025

UART
1030

SPI/SDIO
1035

$I^2S/I^2C$
1040

DISPLAY
1045

SECURITY
ENGINE
1070

MEMORY
CON-
TROLLER
1065

FLASH
1060

MIPI
1055

HDMI
1050

# FIG. 10

GRAPHICS
PROCESSOR
1110

VERTEX PROCESSOR
1105

515

FRAGMENT
PROCESSOR
1115A

515

FRAGMENT
PROCESSOR
1115C

515

FRAGMENT
PROCESSOR
1115N-1

515

FRAGMENT
PROCESSOR
1115B

515

FRAGMENT
PROCESSOR
1115D

515

FRAGMENT
PROCESSOR
1115N

515

MMU
1120A

MMU
1120B

CACHE
1125A

CACHE
1125B

INTERCONNECT
1130A

INTERCONNECT
1130B

FIG. 11A

GRAPHICS
PROCESSOR
1110

| INTER-CORE TASK MANAGER (e.g., THREAD DISPATCHER) 1145 |
|---|

| SHADER CORE 1155A | SHADER CORE 1155C | SHADER CORE 1155E | - - - | SHADER CORE 1155N-1 |
|---|---|---|---|---|
| SHADER CORE 1155B | SHADER CORE 1155D | SHADER CORE 1155F | - - - | SHADER CORE 1155N |

| TILING UNIT 1158 |
|---|

| MMU 1120A | MMU 1120B |
|---|---|
| CACHE 1125A | CACHE 1125B |
| INTERCONNECT 1130A | INTERCONNECT 1130B |

# FIG. 11B

FIG. 12

PARALLEL PROCESSOR MEMORY 1322

MEMORY UNIT 1324A

MEMORY UNIT 1324B

• • •

MEMORY UNIT 1324N

PARALLEL PROCESSOR 1300

PARTITION UNIT 1320A

PARTITION UNIT 1320B

• • •

PARTITION UNIT 1320N

MEMORY INTERFACE 1318

MEMORY CROSSBAR 1316

CLUSTER 1314A

515

CLUSTER 1314B

515

• • •

CLUSTER 1314N

515

PROCESSING CLUSTER ARRAY 1312

SCHEDULER 1310

FRONT END 1308

HOST INTERFACE 1306

I/O UNIT 1304

PARALLEL PROCESSING UNIT 1302

1313

MEMORY HUB 1305

FIG. 13A

TO/FROM
MEMORY UNIT
1324

FRAME BUFFER
INTERFACE
1325

ROP
1326

L2 CACHE
1321

PARTITION UNIT 1320

TO/FROM
MEMORY
CROSSBAR
1316

# FIG. 13B

FIG. 14

**EUROPEAN SEARCH REPORT**

Application Number

EP 25 22 4907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HANSUNG KIM ET AL: "Virgo: Cluster-level Matrix Unit Integration in GPUs for Scalability and Energy Efficiency", ARXIV.ORG CORNELL UNIVERSITY LIBRARY, 201 OLIN LIBRARY CORNELL UNIVERSITY ITHACA, NY 14853, 22 August 2024 (2024-08-22), XP091858597, * sections 3 to 5; figures 2, 4, 5 * | 1-15 | INV.<br>G06F17/16<br>G06F8/00 |
| Y | "ASA: Accelerating Sparse Accumulation in Column-wise SpGEMM", ACM TRANSACTIONS ON ARCHITECTURE AND CODE OPTIMIZATION ASSOCIATION FOR COMPUTING MACHINERY, US, vol. 19, no. 4, 16 September 2022 (2022-09-16), pages 1-24, XP058929815, ISSN: 1544-3566, DOI: 10.1145/3543068 * section 1; figure 6 * | 1-15 | |

TECHNICAL FIELDS
SEARCHED (IPC)

G06F

The present search report has been drawn up for all claims

| Place of search | Date of completion of the search | Examiner |
|---|---|---|
| Berlin | 5 May 2026 | Virnik, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)